(19) Europäisches Patentamt
European Patent Office
Office européen des brevets

(11) Publication number: 0 275 563 B1

(12) **EUROPEAN PATENT SPECIFICATION**

(45) Date of publication of patent specification: **03.11.93**

(51) Int. Cl.[5]: **C08G 77/46**, C08J 9/00

(21) Application number: **87119381.9**

(22) Date of filing: **30.12.87**

The file contains technical information submitted after the application was filed and not included in this specification

(54) **Polysiloxane-polyoxyalkylene compositions for polyurethane foam manufacture.**

(30) Priority: **31.12.86 US 947995**

(43) Date of publication of application:
**27.07.88 Bulletin 88/30**

(45) Publication of the grant of the patent:
**03.11.93 Bulletin 93/44**

(84) Designated Contracting States:
**AT BE CH DE ES FR GB GR IT LI LU NL SE**

(56) References cited:
**EP-A- 0 106 101**
**FR-A- 2 285 417**
**GB-A- 1 066 142**
**US-A- 3 637 541**
**US-A- 4 031 044**

**"Kunststoff-Handbuch", Hauser Verlag, München 1983, p. 102**

(73) Proprietor: **UNION CARBIDE CORPORATION**
**39 Old Ridgebury Road**
**Danbury Connecticut 06817(US)**

(72) Inventor: **Blevins II, Charles Henry**
**142 Washington Avenue**
**Beacon New York 12508(US)**
Inventor: **Herdle, William Bruce**
**101 South Road**
**Greenburgh New York 10603(US)**
Inventor: **Murphy, Gerald Joseph**
**83 Brandy Lane**
**Wappingers Falls New York 12590(US)**

(74) Representative: **Barz, Peter, Dr. et al**
**Patentanwälte Dipl.-Ing. G. Dannenberg**
**Dr. P. Weinhold, Dr. D. Gudel**
**Dipl.-Ing. S. Schubert, Dr. P. Barz**
**Siegfriedstrasse 8**
**D-80803 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.6/3.3.1)

## Description

This invention provides polysiloxane-polyoxyalkylene terpolymers for the manufacture of conventional flexible polyurethane foam. The invention also provides a process for producing conventional flexible polyurethane foam formulations using these terpolymers as foam stabilizers, including flame retardant foams.

Polysiloxane-polyoxyalkylene copolymers were first disclosed in US-A-2,834,748 (Bailey et al., 1958). These compositions were of the hydrolyzable type. Non-hydrolyzable polysiloxane-polyoxyalkylene copolymers were first disclosed in US-A-2,846,458 (Haluska, 1958).

The first use of polysiloxane-polyoxyalkylene copolymers for the stabilization of one-shot flexible polyurethane foam appeared in GB-A-892,136 (Hostettler, 1958). The stabilizers so described were of the hydrolyzable variety. The application of non-hydrolyzable copolymers to the stabilization of polyurethane foams soon followed.

US-A-4,478,957 discloses the use of certain polysiloxane-polyoxyalkylene block copolymers for the production of highly resilient, coldcuring polyurethane foams. These copolymers as defined are limited to lower molecular weight species (less-than-or-equal-to an average of 25 silicon atoms in the siloxane chain) and contain at least two polyoxyalkylene blocks, which are formed from oxyethylene and oxypropylene units, wherein one such block has a weight percent oxyethylene range of from 38 to 100% (45-100 mole %) and the other such block has an oxyethylene weight percent range of from 0 and 57% (0-50 mole %). The molecular weights of the polyoxyalkylene blocks are both between 150 and 1200 and the molar ratio of one block to another falling in the range of 0.25 to 4.00.

These block copolymer compositions showed improved stabilizing properties and formed open-cell high resilient foams at a relatively wide processing latitude. Those skilled in the art recognize that siloxane surfactants for highly resilient (HR) urethane foam provide insufficient stabilization for conventional flexible urethane foam since HR surfactants serve primarily as cell control agents in the inherently more stable high resilient foam formulations.

Additionally, US-A-4,031,044 discloses the use of polysiloxane-polyoxypropylene copolymers for the stabilization of highly resilient polyurethane foams which have low shrinkage and are free of voids without sacrifice of other important physical properties. Again, those skilled in the art realize the inapplicability of HR surfactants in conventional flexible urethane systems.

GB-A-1066 142 describes polyoxyalkylene-polysiloxane block copolymers which are useful as stabilizers for polyurethane foams and are derived from certain chloropolysiloxanylsulphates, certain polyalkylene glycol monoethers and certain alkylene oxide addition products with a polyhydroxyl compound.

It is an object of the invention to produce polysiloxane-polyoxyalkylene compositions for use as stabilizers in the production of polyurethane foam, including flame retardant foams.

Another object of the invention is to provide such compositions which allow the production of an open foam using a wide range of concentrations of these compositions as stabilizers. This will be referred to as improved breathability latitude.

A further object of the invention is to provide such a stabilizer which can be used to produce flame retardant conventional flexible polyurethane foam.

Other objects will become apparent from the description and examples.

The present invention provides certain polysiloxane-polyoxyalkylene compositions and their use as stabilizers in the manufacture of polyether polyurethane foam. More particularly, the present invention provides such compositions, which have a polysiloxane chain substituted with at least two types of polyoxyalkylene polymers as pendants from the silicon atoms of tee polysiloxane.

The polysiloxane chain is linear and can have average molecular weights of up to 30,000 or higher, excluding the weight of the polyoxyalkylene polymers.

The distinctive feature of these compositions is the specific selection of polyoxyalkylene polymers. Preferably the polyoxyalkylene polymer pendants are provided as at least three different polyoxyalkylene polymers. One of these polyoxyalkylene polymers is composed of only oxypropylene units. This polyoxypropylene has an average molecular weight from 130 to 1200 excluding link and endcap. The other polyoxyalkylene polymers are composed of both oxyethylene and oxypropylene units.

The polysiloxane-polyoxyalkylene compositions of the invention are of the nominal formula:

$$R_{3-a}\ R^{o}_{a}\ Si-O\left[\begin{array}{c}R\\ |\\ Si-O\\ |\\ R\end{array}\right]_{x}\left[\begin{array}{c}R\\ |\\ SiO\\ |\\ R'\end{array}\right]_{b}\left[\begin{array}{c}R\\ |\\ SiO\\ |\\ R''\end{array}\right]_{c}\left[\begin{array}{c}R\\ |\\ Si-O\\ |\\ R'''\end{array}\right]_{d}SiR^{o}_{e}R_{3-e}$$

wherein R is an alkyl group having 1 to 3 carbon atoms and R°, R', R'' and R''' are individually monovalent polyoxyalkylene polyethers attached to the silicon atom through a group of formula $\leftarrow C_2H_4)O$- or $\leftarrow C_3H_6)O$-; and

the polyoxyalkylene portion of R' is poly(oxypropylene-oxyethylene) ether which contains 20% to 60% oxyethylene by weight and has an average molecular weight of from 3,000 to 5,500;

the polyoxyalkylene portion of R'' is a poly(oxypropylene-oxyethylene) ether which contains 20% to 60% oxyethylene by weight and has an average molecular weight of from 800 to 2,900; and

the polyoxyalkylene portion of R''' is a polyoxypropylene polyether having an average molecular weight from 130 to 1200; R° can be R', R'' or R'''; a and e are individually 0 or 1; b, c and d are numbers such that $b+c+d = y$; x and y are positive numbers such that the sum of $x + y$ ranges from 25 to 400 and x is greater than y, wherein the ratio $(b + c):d$ ranges from 0.8 to 1.9.

In accordance with the objects of the invention the present invention provides a polysiloxane-polyoxyalkylene composition comprising polysiloxane and specific organic polymer blocks as described below.

The end groups of the polysiloxane are silicon atoms with three organic substituents

$[(R_{3-a}R^{o}_{a}\text{-}Si\rightarrow$ and $\leftarrow SiR^{o}_{e}R_{3-e})]$

as shown above. The silicon atom of the end group is attached to the terminal oxygen atom of the polysiloxane chain.

As stated above, R is an alkyl group having from 1 to 3 carbon atoms. R° can be any of the polyoxyalkylene polyethers attached to the silicon atom through a difunctional link, which are designated R', R'', R''', and are described in more detail below. In the above formula, a and e are individually 0 or 1.

As can be seen from the general formula, the compositions of the present invention are made up of four general difunctional siloxy units having organic substituents. The first unit contains only R as its substituents and this unit is present in an amount "x." The other three units, which contain polyoxyalkylene ethers are present in amounts "b," "c" and "d", respectively. The sum of $b+c+d = y$, the total number of polyoxyalkylene containing siloxy units in the polymer. The number x is greater than y and the sum of $x+y$ ranges from 25 to 400.

The numerical ratio x:y can vary over a broad range. Generally this range is from 3:1 to 15:1. If the terpolymer is to be used as a surfactant in a flame retardant formulation it is preferred that the ratio of x:y be less than 10:1.

FR-A-2285 417 describes products which are very similar to the present compositions. However, said products usually do not contain units equal or similar to the groups R'''.

## Polyoxyalkylene Polyethers

The compositions of the invention contain poly(oxyethylene-oxypropylene) ether and poly-(oxypropylene) ether as pendants from the polysiloxane.

These polyethers are attached to silicon atoms in the polysiloxane through a difunctional link. The difunctional link is of the formula $-(CH_2)-_zO-$ wherein z is 2 or 3.

Preferably, the terminal group of the polyoxyalkylene polyethers is any alkoxy group having 1 to 4 carbon atoms or an acyloxy group of a lower aliphatic carboxylic acid. The preferred terminal group of the polyoxyalkylene polyethers is an acetoxy group.

## Poly(Oxypropylene-Oxyethylene) Polyethers

The poly(oxyethylene-oxypropylene) polyethers contain from 20% to 60% oxyethylene by weight, with the balance of the weight, excluding the link and terminal groups, made up of oxypropylene. Preferably the

poly(oxypropylene-oxyethlene) polyether is 40% oxyethylene by weight.

It is preferred that the composition contain two poly(oxyethylene-oxypropylene) ether components of different average molecular weights.

The average molecular weight of the first, or higher molecular weight, poly(oxyethylene-oxypropylene) component (R') is generally from 3,000 to 5,500. The average molecular weight of the second, or lower molecular weight poly(oxyethylene-oxypropylene) component (R'') is generally from 800 to 2,900.

The higher molecular weight poly(oxyethylene-oxypropylene) component, R', can be provided as (i) a polyoxyalkylene copolymer having an average molecular weight in the range of from 3000 to 5500 wherein 20 to 60 weight percent of the oxyalkylene groups of said copolymer are oxyethylene, the remainder of the oxyalkylene groups being oxypropylene, or (ii) a blend of at least two polyoxyalkylene copolymers having different average molecular weights in the range of from 3000 to 5500 and wherein 20 to 60 weight percent of the oxyalkylene groups of the copolymers in said blend are oxyethylene, the remainder of the oxyalkylene groups being oxypropylene, with the proviso that said blend has an average molecular weight in the range of from 3000 to 5500.

Similarly, the lower molecular weight poly(oxyethylene-oxypropylene), R'', can be provided as (i) a polyoxyalkylene copolymer having an average molecular weight in the range of from 800 to 2900 wherein 20 to 60 weight percent of the oxyalkylene groups of said copolymer are oxyethylene, the remainder of the oxyalkylene groups being oxypropylene, or (ii) a blend of at least two polyoxyalkylene copolymers having different average molecular weights in the range of from 500 to 2900 and wherein 20 to 60 weight percent of the oxyalkylene groups of the copolymers in said blend are oxyethylene, the remainder of the oxyalkylene groups being oxypropylene, with the proviso that said blend has an average molecular weight in the range of from 800 to 2900.

The higher molecular weight polyether component, R', is present in an amount designated as "b". The lower molecular weight polyether component, R'', is present in an amount designated as "c". The proportions of R' to R'' are generally such that

$$\frac{b}{b + c} = \text{from 1 to 0.}$$

The two polyether components are preferably used in proportions such that the blend average molecular weight of the two poly(oxyethylene-oxypropylene) polyethers is from 2,400 to 3,400.

20 to 60 weight percent of the oxyalkylene groups of the polyoxyalkylene copolymers (be they low or high molecular weight polyoxyalkylene polyethers) must be oxyethylene, the remainder of the oxyalkylene groups of said copolymers being oxypropylene. Of course, it is to be understood that the oxyethylene and oxypropylene groups of said copolymers may be present in the polyoxyalkylene block in a random or block fashion. The expression poly(oxyethylene-oxypropylene) copolymers as employed herein is used to represent copolymers in which oxyalkylene groups are present in random distribution (and indeed such is preferred) as well as copolymers in which the oxyalkylene groups are present as blocks. Therefore, in no way should the expression poly(oxyethylene-oxypropylene) copolymer be interpreted as merely encompassing copolymers in which oxyalkylene groups are present in blocks, i.e., a block of oxyethylene and a block of oxypropylene. Of course, it is to be also understood that the term propylene oxide employed herein refers to 1,2-propylene oxide and the oxypropylene radical derived therefrom.

Polyoxypropylene Polyether

The third polyoxyalkylene polyether, R''', is a polyoxypropylene polyether.

The molecular weight of the polyoxypropylene polyether, R''' is generally greater than 130. The molecular weight of the polyoxypropylene is from 130 to 1200. The preferred molecular weight range for the polyoxypropylene is from 200 to 1,000. As with the other polyoxyalkylene components the polyoxypropylene may also be provided as a blend of at least two polyoxypropylene polyethers to provide a blend having an average molecular weight in the stated ranges.

The polyoxypropylene R''' is present in an amount "d". The molar ratio of poly(oxyethylene-oxypropylene) pendants to poly(oxypropylene) pendants expressed as (b+c):d ranges from 0.8:1 to 1.9:1.

Some of the polyoxypropylene polyether can be left uncapped; that is the terminal group is hydroxyl attached to the terminal carbon atom.

Method of Preparation

The polyoxyalkylene polyether components are well known in the art and/or can be produced by any conventional process. For instance, monohydroxy terminated polyoxyalkylene polyethers which are convenient starting materials in the preparation of the terpolymer can be prepared by reacting a suitable alcohol with ethylene oxide and propylene oxide (1,2-propylene oxide) to produce the copolymer polyether, or with propylene oxide alone to produce the polyoxypropylene ether. Suitable alcohols are alkanols, e.g., methanol, ethanol, propanol, isopropanol, butanol and tertiary butanol; hydroxy aryl compounds, e.g., phenol; hydroxy aralkyl compounds, e.g., 2-phenyl ethanol; and hydroxy alkenyl compounds, e.g., allyl alcohol. In general the alcohol starter preferably is placed in an autoclave or other high-pressure vessel along with catalytic amounts of a suitable catalyst, such as sodium hydroxide, potassium hydroxide, other alkali metal hydroxides, or sodium or other alkali metals. Further details of preparation are set forth,for example, in US-A-3,980,688.

The above-described alcohol-oxide reaction produces a monohydroxy end-blocked polyoxyalkylene polyether in which the other end-blocking group is an alkoxy, aryloxy, aralkyloxy, or alkenyloxy radical.

These polyethers can be converted to monoalkenyloxy terminated polyoxyalkylene polyethers by converting (capping) the hydroxyl terminal group of said monohydroxy endblocked poly-(oxyethyleneoxypropylene) copolymers by any conventional means. For example, when the monohydroxy terminated polyether is started with an alkanol, hydroxy aryl or hydroxy aralkyl compound the copolymer can be reacted with an alkali metal alkoxide, preferably sodium methoxide, to produce the alkali metal alkoxide of the polyether which is then reacted with an alkenyl halide, preferably a chloride and especially allyl chloride, to give the desired monoalkenyloxy endblocked polyoxyalkylene polyether in which the other end-blocking group is alkoxy, aryloxy, or aralkyloxy radical. Alternatively, when the monohydroxy terminated polyether is started with an hydroxy alkenyl compound, the hydroxyl terminal group of the copolymer can be capped in the same manner using alkyl, aryl or aralkyl halides (preferably chlorides) or by esterifying said hydroxy terminal group with an acyl (preferably acetic anhydride) compound to give the desired monoalkenyloxy endblocked polyethers in which the other endblocking group is an alkoxy, aryloxy, aralkyloxy or acyloxy radical.

The method of producing the novel polysiloxane-polyoxyalkylene block terpolymers of this invention can be conducted in the same manner as any conventional known method for producing polysiloxanepolyoxyalkylene block copolymers such as described, e.g., in US-A-2,834,748, 2,920,1150 and 3,801,616. Such conventional methods have been described above and involve the common chemical reactions of reacting the polyoxyalkylene polyether with a polysiloxane containing a silanic hydrogen, an alkoxy radical, an amino radical or a halogen atom directly attached to a silicon atom of the polysiloxane at elevated temperatures, e.g., from about 60°C to about 140°C in the presence of a catalyst such as trifluoroacetic acid and platinum catalysts (e.g., chloroplatinic acid), and in the presence of a solvent (e.g., liquid hydrocarbons, such as toluene) for the polyoxyalkylene polyether and polysiloxane reactants. The usual conventional amounts of components and reaction conditions can be employed and such is well within the knowledge of one skilled in the art. For instance, approximately stoichiometric amounts of slightly higher of the polyoxyalkylene polyether and the functional group containing polysiloxane reactants (one hydroxy or alkenyloxy polyether group per silanic hydrogen or silicon-bonded alkoxy, amino or halogen radical) are preferred, while the amount of catalyst need obviously only be a catalytic amount. The temperature of the reaction, of course, largely depends merely on the reactants involved and the polysiloxane-polyoxyalkylene block terpolymer desired to be produced.

Of course, it is to be understood that the polysiloxane-polyoxyalkylene block copolymers of this invention can contain small amounts of other siloxy units, e.g., SiH groups (owing to incomplete reaction thereof with the polyoxyalkylene reactant) and/or Si-alkoxy or Si-OH groups owing to the incomplete hydrolysis and condensation of the silanes used to produce the siloxane reactant.

Preparation of Conventional Flexible Polyurethane Foam

In addition to the novel polysiloxane polyoxyalkylene compositions of the present invention, the other essential types of components and reactants employed in providing flexible polyether polyurethane foams as described herein are polyether polyols, organic polyisocyanates, a catalyst system and blowing agent.

In producing the flexible polyether polyurethane foams according to the present invention, one or more polyether polyols is employed for reaction with the polyisocyanate reactant to provide the urethane linkage. Such polyols have an average of at least two, and usually not more than six, hydroxyl groups per molecule and include compounds which consist of carbon, hydrogen and oxygen and compounds which also contain

phosphorus, halogen and/or nitrogen.

Such polyether polyols are well known in the art and include, for example, polyethers exemplified by the following classes of composition:

a. Polyoxyalkylene polyols including alkylene oxide adducts of, for example, water; ethylene glycol; diethylene glycol; propylene glycol; 1,5-pentanediol; hexylene glycol; dipropylene glycol; trimethylene glycol; 1,2-cyclohexanediol; and dibromo-derivatives thereof; glycerol; 1,2,6-hexanetriol; 1,1,1-trimethylolethane; 1,1,1-trimethyolpropane; 3-(2-hydroxyethoxy)- and 3-(2-hydroxypropoxy)-1,2-propanediols; 2,4-dimethyl-2-(2-hydroxyethoxy)methylpentanediol-1,5; 1,1,1-tris[(2-hydroxyethoxy)methyl]-ethane; 1,1,1-tris[(2-hydroxypropoxy)methyl]propane; pentaerythritol; sorbitol; sucrose; lactose; alphamethyl glucoside; alpha-hydroxyalkylglucoside; ammonia; triethanolamine; triisopropanolamine; ethylenediamine, diethylenetriamine, novolac resins; phosphoric acid; benzenephosphoric acid; polyphosphoric acids such as tripolyphosphoric acid and tetrapolyphosphoric acid; phenolaniline; formaldehyde tertiary condensation products and aniline-formaldehyde condensation products. The alkylene oxides employed in producing the polyoxyalkylene polyols normally have 2 to 4 carbon atoms. Propylene oxide and mixtures of propylene oxide with ethylene oxide are preferred.

b. Polymer/polyether polyols which are produced by polymerizing one or more ethylenically unsaturated monomers dissolved or dispersed in a polyether polyol in the presence of a free radical catalyst. Suitable polyether polyols for producing such compositions include, for example, any of the above described polyols encompassed by paragraph (a) above. Illustrative of suitable ethylenically unsaturated monomers are those encompassed by the general formula

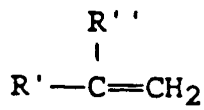

where: R' is hydrogen, methyl or any of the halogens (i.e., fluorine, chlorine, bromine or iodine); and R'' is R', cyano, phenyl, methyl-substituted phenyl, or an alkenyl radical having from 2 to 6 carbon atoms such as vinyl, allyl and isopropenyl groups. Typical examples of such polymerizable monomers are the following which may be employed individually or in combination; ethylene, propylene, acrylonitrile, methacrylonitrile, vinyl chloride, vinylidene chloride, styrene, alpha-methylstyrene, and butadiene. These and other polymer/polyol compositions which are suitably employed either individually or in combination with polyethers mentioned in paragraph (a) above are described in GB-A-1,063,222 and US-A-3,383,351. Such compositions are prepared by polymerizing the monomers in the polyol at a temperature between 40 °C and 150 °C employing any free radical-generating initiator including peroxides, persulfates, percarbonates, perborates, and azo compounds, such as, for example, hydrogen peroxide, dibenzoyl peroxide, benzoyl hydroperoxide, lauroyl peroxide, and azobis(isobutyronitrile). The polymer/polyether polyol product may also contain a small amount of unreacted polyether, monomer and free polymer.

c. Lactone polyols prepared by reacting a lactone such a epsilon-caprolactone or a mixture of epsilon-caprolactone and an alkylene oxide with a polyfunctional initiator such as a polyhydric alcohol, an amine, or an aminoalcohol, are also useful.

d. Phosphorus-containing derivatives such as tris(dipropylene)glycol phosphite and other phosphites are also useful.

In preparing the flexible polyether polyurethane foams in accordance with the present invention it is, of course, to be understood that any of the aforesaid polyether polyols or mixtures thereof can be employed as reactants with the organic polyisocyanate. The particular polyether polyol or polyols employed merely depends upon the desired end-use of the polyurethane foam. Usually diols provide soft foams; firmer foams are obtained by the incorporation of polyether polyols having more than two hydroxyl groups, including triols, tetra-ols, pentols and hexols. When it is desired to produce polyurethanes having comparatively high load-bearing properties and/or die-cutability, polymer/polyether polyols of the aforesaid type are used.

The hydroxyl number of the polyether polyol reactant including mixtures of polyols employed in the production of the flexible polyurethane foams of this invention may vary over a relatively wide range such as from 20 to 150, and is usually no higher than 80. As is well known in this art, the hydroxyl numbers are determined by, and are defined as, the number of milligrams of potassium hydroxide required for the complete neutralization of the hydrolysis product of the fully acetylated derivative prepared from 1 gram of polyol or mixture of polyols. The hydroxyl number is also defined by the following equation which indicates its relationship with the molecular weight and functionality of the polyol:

$$OH = \frac{56.1 \times 1000 \times f}{M.W.}$$

wherein

OH = hydroxyl number of the polyol, f = average functionality, that is, the average number of hydroxyl groups per molecule of polyol and M.W. = average molecular weight of the polyol.

The organic polyisocyanates that are useful in producing flexible polyether polyurethane foam in accordance with the process of this invention are well known in the art and are organic compounds that contain at least two isocyanato groups and any such compounds or mixtures thereof may be employed. Among such suitable polyisocyanates are those conveniently represented by the general formula:

$D(NCO)_i$

wherein i is an integer of two or more and D is an organic radical having the valence of i. D can be a substituted or unsubstituted hydrocarbon group (e.g., alkylene, cycloalkylene, arylene, alkarylene and aralkylene. D can also be a group having the formula D'-T-D' wherein D' is an alkylene or arylene group and T is a divalent moiety such as -O,-O-D'-O-,-C(O)- , -S-, -S-D'-S-, or $-SO_2-$.

Illustrative of suitable organic polyisocyanate reactants are the following, including mixtures thereof: 1,2-diisocyanato-ethane; 1,3-diisocyanato-propane; 1,2-diisocyanato-propane; 1,4-diisocyanato-butane; 1,5-diisocyanato-pentane; 1,6-diisocyanato-hexane; 1,5-diisocyanato-2, 2-dimethyl-pentane; 1,7-diisocyanato-heptane; 1,5-diisocyanato-2, 2,4-trimethyl-pentane; 1,8-diisocyanato-octane; 1,9-diisocyanato-nonane; 1,10-diisocyanato-decane; 1,11-diisocyanato-undecane; 1,12-diisocyanato-dodecane; 1,6-diisocyanato-3-methoxyhexane; 1,6-diisocyanato-3-butoxy-hexane; bis(3-isocyanato-propyl)ether; the bis(3-isocyanato-propyl)ether of 1,4-butylene glycol; $(OCNCH_2CH_2CH_2CH_2OCH)_2O$; bis(2-isocyanatoethyl) carbonate; 1-methyl-2, 4-diisocyanato-cyclohexane; 1,8-diisocyanato-p-menthane; bis 5,6-(2-isocyanatoethyl)bicyclo(2.2.1]-hept-2-ene; bis(3-isocyanato-propyl)sulfide; bis(isocyanato-hexyl)sulfide; 1,4-phenylene-diisocyanate; 2,4-tolylene-diisocyanate; 2,6-tolylene-diisocyanate; crude tolylene diisocyanates; xylylene diisocyanates; 4-chloro-1,3-phenylene-diisocyanate; 4-bromo-1, 3-phenylene-diisocyanate; 4-nitro(1,3 or 1,5)-phenylene-diisocyanate;; 4-ethoxy-1,3-phenylenediisocyanate; benzidine diisocyanate; toludiene diisocyanate; dianisidine diisocyanate; 2,4'-or 4,4'-diisocyanato-diphenyl ether; diphenylmethane-4,4'-diisocyanate; 4-4'-diisocyanatodibenzyl; isopropyl-benzene-alpha-4-diisocyanate; 1,5-diisocyanato-naphthalene; 1,8-diisocyanato-naphthalene; 9,10-diisocyanato-anthracene; triphenyl-methane-4,4', 4''-triisocyanate; 2,4,6-toluene triisocyanate; and many other organic polyisocyanates that are known in the art such as those disclosed in an article by Siefken, Ann. 565,75 (1949). In general, the aromatically unsaturated polyisocyanates are preferred.

Further included among the isocyanates useful in the process of this invention are dimers and trimers of isocyanates and diisocyanatesand polymeric diisocyanates such as those having the general formula:

$[D(NCO)_i]_j$

in which i and j are integers of two or more, and/or (as additional components in the reaction mixtures) compounds of the general formula:

$L'(NCO)_i$

in which i is one or more and L' is a monofunctional or polyfunctional atom or radical. Examples of this type include ethylphosphonic diisocyanate, $C_2H_5P(O)(NCO)_2$; phenylphosphonic diisocyanate, $C_6H_5P(O)(NCO)_2$; compounds containing an ≡Si-NCO group, isocyanates derived from sulfonamides ($DSO_2NCO$), cyanic acid, thiocyanic acid, and compounds containing a metal-NCO radical such as tributyltin isocyanate.

Also, included as useful in the preparation of the flexible polyether polyurethane foams in accordance with the process of this invention are the polyisocyanates of the aniline-formaldehyde polyaromatic type which are produced by phosgenation of the polyamine obtained by acid-catalyzed condensation of aniline with formaldehyde. Poly(phenylmethylene) polyisocyanates of this type are available commercially under such trade names as PAPI®, NIAX® Isocyanate AFPI, Mondur® MR, Isonate® 390 P, Thanate® P-220, NCO-120, NCO-20. These products are low viscosity (50-500 mPa•s (centipoises) at 25°C.) liquids having average isocyanato functionalities in the range of about 2.25 to about 3.2 or higher, depending upon the

specific aniline-to-formaldehyde molar ratio used in the polyamine preparation.

Other useful polyisocyanates are combinations of diisocyanates with polymeric isocyanates containing more than two isocyanato groups per molecule. Illustrative of such combinations are: a mixture of 2,4-tolylene diisocyanate, 2,6-tolylene diisocyanate and the aforesaid poly(phenylmethylene) polyisocyanates; and a mixture of isomeric tolylene diisocyanates with polymeric tolylene diisocyanates obtained as residues from the manufacture of the diisocyanates.

On a combined basis, the polyether polyol and organic polyisocyanate reactants usually constitute the major proportion by weight of the polyurethane-forming reaction mixture. In general, the polyisocyanate and polyether polyol reactants are employed in relative amounts such that the ratio of total-NCO equivalents to total active hydrogen equivalent (of the polyether polyol and any water, when used) is from 0.8 to 1.5, preferably from 0.9 to 1.1, equivalents of -NCO per equivalent of active hydrogen. This ratio is known as the Isocyanate Index and is often also expressed as a percent of the stoichiometric amount of polyisocyanate required to react with total active hydrogen. When expressed as a percent, the Isocyanate Index may be from 80 to 150, and is preferably within the range from 90 to 120.

The urethane-forming reaction is effected in the presence of a minor amount of a catalyst, preferably an amine catalyst and usually a tertiary amine. Suitable amine catalysts include one or more of the following: N-methylmorpholine; N-ethylmorpholine; N-octadecylmorpholine; triethylamine; tributylamine; tri-octylamine; N,N,N',N'-tetramethyl-ethylenediamine; N,N,N',N'-tetramethyl-1,3-butane-diamine; triethanolamines; N,N-dimethylethanolamine; triisopropanolamine; N-methyldiethanolamine; hexadecyldimethylamine; N,N-dimethylbenzylamine; trimethylamine; N,N-dimethyl-2(2-dimethylaminoethoxy)ethylamine, also known as bis(2-dimethylaminoethyl)ether; triethylenediamine (i.e., 1,4-diazabicyclo[2.2.2]octane); the formate and other salts of triethylenediamine, oxyalkylene adducts of the amino groups of primary and secondary amines and other such amine catalysts which are well known in the art of polyurethane manufacture such as the beta-amino carbonyl catalysts of US-A-3,821,131, especially 3-dimethylamino-N,N-dimethyl-propionamide. The amine catalyst may be introduced to the polyurethane producing reaction mixture as such or as a solution in suitable carrier solvents such as diethylene glycol, dipropylene glycol, and 2-methyl-2,4-pentanediol ("hexylene glycol"); preferably the amine catalyst is generally present in the final urethane-producing reaction mixture in an amount of from 0.05 to 3 parts by weight of active catalyst (that is, the amine exclusive of other components present in solutions thereof) per 100 parts by weight of the polyether polyol reactant (referred to by using the phrase pphp).

It is also preferred to include a minor amount of certain metal catalysts in addition to the amine catalyst in the component of the reaction mixture for the production of the polyurethane foam. Such supplementary catalysts are well known to the art of flexible polyether-based polyurethane foam manufacture. For example, useful metal catalysts include organic derivatives of tin, particularly tin compounds of carboxylic acids such as stannous octoate, stannous oleate, stannous acetate, stannous laurate, dibutyl tin dilaurate, and other such tin salts. Additional metal catalysts are organic derivatives of other polyvalent metals such as zinc and nickel (e.g., nickel acetylacetonate). In general, the amount of such metal cocatalysts which can be present in the polyurethane producing reaction mixture is within the range from 0.05 to 2 (pphp) parts by weight per 100 parts by weight of the polyether polyol reactant.

Foaming is accomplished by employing a small amount of a polyurethane blowing agent such as water in the reaction mixture (e.g., 0.5 to 5 weight percent of water, based on the total weight of the reaction mixture) which upon reaction with isocyanate generates carbon dioxide in situ, or through the use of blowing agents which are vaporized by the exotherm of the reaction, or by a combination of the two methods. These various methods are known in the art. Thus, in addition to or in place of water, other blowing agents which can be employed in the process of this invention include methylene chloride, liquefied gases which have boiling points below 27 °C (80 °F), and above -51 °C (-60 °F), or other inert gases such as nitrogen, carbon dioxide added as such, methane, helium and argon. Suitable liquefied gases include aliphatic and cycloaliphatic fluorocarbons which vaporize at or below the temperature of the foaming mass. Such gases are at least partially fluorinated and may also be otherwise halogenated. Fluorocarbon blowing agents suitable for use in foaming the formulations of this invention include trichloro-monofluoromethane, dichlorodifluoromethane, 1,1-dichloro-1-fluoroethane, 1,1,1-trifluoro-3,3-difluoro-4,4,4-trifluorobutane, hexafluorocyclobutene and octafluorocyclobutane. Another useful class of blowing agents include thermally-unstable compounds which liberate gases upon heating, such as N,N'-dimethyl-N,N'-dinitrosoterephthalamide. The generally preferred method for producing flexible foams is the use of water or a combination of water plus a fluorocarbon blowing agent such as trichloromonofluoromethane. The amount of blowing agent employed in the foaming reaction will vary with factors such as the density that is desired in the foamed product. Usually, however, from 1 to 30 parts by weight of the blowing agent per 100 parts by weight of the polyether polyol reactant is preferred.

The polyether-based polyurethane foams may be formed in accordance with any of the processing techniques known to the art such as, in particular, the "one-shot" technique. In accordance with this method, foamed products are provided by carrying out the reaction of the polyisocyanate and polyether polyol simultaneously with the foaming operation. It is sometimes convenient to add the polysiloxane-polyoxyalkylene block terpolymer foam stabilizer to the reaction mixture as a premixture with one or more of the blowing agent, polyether polyol, and catalyst components. Typically the amount of polysiloxane-polyoxyalkylene terpolymer is from 0.1 to 5.0 parts by weight per 100 parts by weight of the polyether polyol (pphp). Preferably the amount of terpolymer is from 0.45 to 3.0 pphp, and most preferably from 0.75 to 2.0 pphp.

It is to be understood that the relative amounts of the various components of the foam formulations are not narrowly critical. The polyether polyol and polyisocyanates are present in the foam-producing formulation in a major amount. The relative amount of these two components is the amount required to produce the desired urethane structure of the foam and such relative amounts are well known in the art. The blowing agent, catalyst and polysiloxane-polyoxyalkylene block terpolymer foam stabilizer are each present in a minor amount necessary to achieve the function of the component. Thus the blowing agent is present in an amount sufficient to foam the reaction mixture, the catalyst is present in a catalytic amount (i.e., an amount sufficient to catalyze the reaction to produce the urethane at a reasonable rate), and the polysiloxane-polyoxyalkylene block copolymers of this invention are present in a foam stabilizing amount, that is, in an amount sufficient to stabilize the foam. The preferred amounts of these various components are as given hereinabove.

If desired other additional ingredients can be employed in minor amounts in producing the polyurethane foams in accordance with the process of this invention. Illustrative of such additives that can be employed are: cross-linking agents such as glycerol, triethanolamine and their oxyalkylene adducts, as well as fillers, dyes, pigments and anti-yellowing agents. Flame retardant agents can also be employed if desired. Such flame retardants are well known in the art and include a variety of compounds which preferably contain phosphorus or halogen or both phosphorus and halogen. Illustrative of such flame retardant agents include those disclosed in US-A-3,846,462; 3,075,927; 3,075,928; 3,222,305; and 3,574,149. Preferably, a minor amount of flame retardant additive is added to the polyurethane producing mixture prior to the reacting step.

The polyurethanes produced in accordance with the present invention can be used in the same areas as other conventional flexible polyether polyurethanes. For example, the foams of the present invention can be used with advantage in the manufacture of textile interliners, cushions, mattresses, paddings, carpet underlay, packaging, gaskets, sealers and thermal insulators.

Whereas the exact scope of the instant invention is set forth in the appended claims, the following specific examples illustrate certain aspects of the present invention and, more particularly, point out methods of evaluating the same. However, the examples are set forth for illustration only and are not to be construed as limitations on the present invention except as set forth in the appended claims. All parts and percentages are by weight unless otherwise specified.

## EXAMPLES

In the following examples the formula MDD'M is used to describe the polyhydridosiloxane polymer reactant. It is to be understood that M = $(CH_3)_3SiO_{1/2}$, D = $(CH_3)_2SiO_{2/2}$ and D' = $CH_3Si(H)O_{2/2}$. In the following examples, R', R'' and R''' are used to indicate starting materials which correspond to the pendant so designated in the claimed structure. The term terpolymer is used herein to denote the final composition comprising polysiloxane, poly(oxethylene-oxypropylene) and polyoxypropylene.

### EXAMPLE 1

In a 250 mL three necked flask fitted with a heating mantle, mechanical stirrer, thermometer, Dean-Stark trap, Friedrich condenser and nitrogen sparge tube were combined 25.77 grams of an allyl started, acetoxy endcapped polyoxyalkylene polymer (R'') with an average molecular weight of about 1638 and containing about 40 weight percent oxyethylene groups and about 60 weight percent oxypropylene groups (designated herein as Polyether A), 49.33 grams of an allyl started, acetory endcapped polyoxyalkylene polymer (R') with an average molecular weight of about 4301 and containing about 40 weight percent oxyethylene groups and about 60 weight percent oxypropylene groups (designated herein as Polyether B), 3.89 grams of an ally1 started, acetoxy endcapped polyoxypropylene ether (R''') with an average molecular weight of about 233 (designated herein as Polyether C) and 42.82 grams of toluene. Then, 21.10 grams of a

polyhydridosiloxane polymer having the average formula

$MD_{76}D'_9M$

(Calculated: 31.82mL$H_2$/gram; Analyzed: 31.4mL$H_2$/gram was added to the pot. This mixture was heated to 85 °C and 0.36 mL of an $H_2PtCl_6$/ethanol solution (10 mg Pt/mL) was added, corresponding to 25 ppm Pt. After holding the pot contents at 85 °C for one hour, 1 wt. % $NaHCO_3$ was added followed by a nitrogen sparge assisted solvent strip. After completion of the strip, the pot contents were pressure filtered and the product collected. This product, designated herein as Surfactant 1, was a clear, amber colored liquid.

EXAMPLES 2-5

Following the procedure of Example 1, the following siloxane-polyether terpolymers were prepared.

TABLE I

| Surf. | Polyhydridosiloxane | R" Polyether A | R' Polyether B | R''' Polyether C |
|---|---|---|---|---|
| 2 | $MD_{76}D'_9M$ - 22.25 g | 27.87 g | 45.57 g | 4.34 g |
| 3 | " - 23.56 g | 30.04 g | 41.57 g | 4.87 g |
| 4 | " - 22.46 g | 30.81 g | 42.62 g | 4.14 g |
| 5 | " - 22.16 g | 25.12 g | 48.18 g | 4.58 g |

These preparations cover a range of 2500 to 2700 for the average molecular weight of Polyethers A and B and a molar ratio range of Polyethers A and B to Polyether C of 1.45 - 1.75.

EXAMPLES 6-9

Following the procedure of Example 1, the following siloxane-polyether terpolymers were prepared.

TABLE II

| Surf. | Polyhydridosiloxane | R'' Polyether A | R' Polyether B | R''' Polyether D |
|---|---|---|---|---|
| 6 | $MD_{76}D'_9M$ - 21.17 g | 24.33 g | 46.66 g | 7.88 g |
| 7 | " - 20.85 g | 24.58 g | 47.14 g | 7.47 g |
| 8 | " - 19.49 g | 18.20 g | 55.09 g | 7.26 g |
| 9 | " - 19.18 g | 18.38 g | 55.62 g | 6.87 g |

Polyether D is an allyl started, acetoxy endcapped polyoxypropylene ether (R''') with an average molecular weight of about 424.

The above prepared terpolymers covered an average molecular range of 2700 to 3000 for Polyethers A and B and a molar ratio of Polyethers A and B to Polyether D of 1.5 to 1.6.

EXAMPLES 10-13

Following the procedure in Example 1, the following siloxane-polyether terpolymers were prepared.

**TABLE III**

| Surf. | Polyhydridosiloxane | R'' Polyether A | R' Polyether E | R''' Polyether F |
|---|---|---|---|---|
| 10 | $MD_{76}D'_9M$ - 19.27 g | 25.84 g | 45.74 g | 9.14 g |
| 11 | " - 19.74 g | 25.34 g | 44.85 g | 10.08 g |
| 12 | " - 17.23 g | 18.60 g | 56.00 g | 8.17 g |
| 13 | " - 17.68 g | 18.27 g | 55.02 g | 9.03 g |

Polyether E is an allyl started, acetoxy endcapped polyoxyalkylene polymer (R') with an average molecular weight of about 3989 and containing about 40 weight percent oxyethylene groups and about 60 weight percent oxypropylene groups.

Polyether F is an allyl started, acetoxy endcapped polyoxpropylene ether (R''') with an average molecular weight of about 590.

The terpolymers described in Table III cover a molecular weight range for polyethers A and E of 2450 - 2750 and a molar ratio of Polyethers A and E to Polyether F of 1.6 - 1.8.

EXAMPLES 14-18

Following the procedures outlined in Example 1, the following siloxane-polyether terpolymers were prepared.

**TABLE IV**

| Surf. | Polyhydridosiloxane | R'' Polyether A | R' Polyether E | R''' Polyether F |
|---|---|---|---|---|
| 14 | $MD_{76}D'_9M$ - 20.96 g | 29.52 g | 38.82 g | 10.71 g |
| 15 | " - 22.34 g | 34.26 g | 31.99 g | 11.41 g |
| 16 | " - 20.31 g | 24.71 g | 43.74 g | 11.24 g |
| 17 | " - 18.24 g | 17.87 g | 53.80 g | 10.10 g |
| 18 | " - 18.65 g | 21.61 g | 50.21 g | 9.53 g |

Terpolymers 14 and 15 represent compositions where the molar ratio of Polyethers A and E to Polyether F is held at 1.6 and the average molecular weight of Polyethers A and E are 2300 and 2150, respectively.

Terpolymers 16-18 represent compositions where the molar ratio of Polyethers A and E to Polyether F is held at 1.4 and the average molecular weight of Polyethers A and E are 2450 and 2750, respectively.

EXAMPLES 19-23

The following terpolymers were prepared following the procedures outlined in Example 1.

**TABLE V**

| Surf. | Polyhydridosiloxane | R'' Polyether G | R' Polyether H | R''' Polyether I |
|---|---|---|---|---|
| 19 | $MD_{76}D'_9M$ - 22.3 g | 29.2 g | 44.4 g | a |
| 20 | " - 22.4 g | 29.3 g | 44.6 g | b |
| 21 | " - 22.3 g | 28.4 g | 46.3 g | c |
| 22 | " - 22.4 g | 29.2 g | 44.4 g | d |
| 23 | " - 21.0 g | 24.4 g | 50.8 g | e |

Polyether G is an allyl started, acetoxy endcapped polyoxyalkylene polymer with an average molecular weight of about 1638 and containing about 40 weight percent oxyethylene groups and about 60 weight percent oxypropylene groups (R'').

Polyether H is an allyl started, acetoxy endcapped polyoxyalkylene polymer with an average molecular weight of about 3989 and containing about 40 weight percent oxyethylene groups and about 60 weight percent oxypropylene groups (R').

Terpolymers 19-21 represent compositions where the molar ratio of Polyethers G and H to Polyether I(a - c) is held at 1.75, the blend average molecular weight of Polyethers G and H are held at 2500. Both Polyether G and H have 40% by weight oxyethylene units. Polyethers I(a - c) represent R''' and are based upon the same allyl started polypropylene oxide polymer with a molecular weight of 191 and differ only in the degree of acetoxy capping where Ia is 98.3% capped, Ib is 54% capped and Ic is completely hydroxyl terminated.

Terpolymer 22 represents a composition of blend average molecular weight of Polyethers G and H of 2500, and a molar ratio of Polyethers G and H to Polyether Id of 1.75 where Polyether Id is based upon an allyl started polyether with a molecular weight of 191 which has been acetoxy endcapped to an efficiency of 77.2%.

Terpolymer 23 represents a composition with blend average molecular weight of Polyethers G and H of 2700, and a molar ratio of Polyethers G and H to Polyether Ie of 1.75 where Polyether Ie is the same as Polyether Id, described above.

EXAMPLES 24-30

The following silicone polyether terpolymers were prepared according to the procedure outlined in Example 1.

TABLE VI

| Surf. | Polyhydridosiloxane | R'' Polyether G | R' Polyether H | R''' Polyether D |
|---|---|---|---|---|
| 24 | $MD_{76}D'_9M$ - 19.82g | 26.57 g | 47.03 g | 6.59 g |
| 25 | " - 20.35 g | 26.13 g | 46.24 g | 7.29 g |
| 26 | " - 21.02 g | 25.57 g | 45.26 g | 8.15 g |
| 27 | " - 17.66 g | 19.07 g | 57.41 g | 5.87 g |
| 28 | " - 18.81 g | 18.42 g | 55.48 g | 7.30 g |
| 29 | " - 18.17 g | 18.78 g | 56.55 g | 6.51 g |
| 30 | " - 23.13 g | 35.47 g | 33.13 g | 8.28 g |

The terpolymers described above (24-30) have been prepared in 30 weight percent toluene. The terpolymers of this example cover a blend average molecular weight range for Polyethers G and H of 2150 - 2750 and a molar ratio of polyethers G and H to Polyether I of 1.4 - 1.8.

EXAMPLES 31-35

The following terpolymers were prepared according to the method described in Example 1.

TABLE VII

| Surf. | Polyhydridosiloxane | R'' Polyether J | R' Polyether K | R''' Polyether D |
|---|---|---|---|---|
| 31 | $MD_{76}D'_{9}M$ - 21.7 g | 25.2 g | 45.1 g | 8.1 g |
| 32 | " - 22.5 g | 24.6 g | 43.9 g | 9.1 g |
| 33 | " - 20.7 g | 18.7 g | 52.3 g | 8.4 g |
| 34 | " - 19.9 g | 19.1 g | 53.6 g | 7.4 g |
| 35 | " - 21.1 g | 21.8 g | 48.9 g | 8.2 g |

Polyether J is an allyl started, acetoxy endcapped polyoxyalkylene polymer with an average molecular weight of about 1578 and containing about 40 weight percent oxyethylene groups and about 60 weight percent oxypropylene groups (R'').

Polyether K is an allyl started, acetoxy endcapped polyoxyalkylene polymer with an average molecular weight of about 4300 and containing about 40 weight percent oxyethylene groups and about 60 weight percent oxypropylene groups (R').

Terpolymers 31-35 represent compositions where the blend average molecular weight of Polyethers J and K together is 2600 - 2900 and the molar ratio of Polyethers J and K to Polyether I is 1.3 - 1.4.

EXAMPLE 36

The following terpolymer was prepared according to the following procedure.

In a 250 mL three necked flask fitted with a heating mantle, mechanical stirrer, thermometer, Dean-Stark trap, Friedrich condenser and nitrogen sparge tube were combined 24.6 grams of R'', an allyl started, acetoxy endcapped polyoxyalkylene polymer with an average molecular weight of about 1578 and containing about 40 weight percent oxyethylene groups and about 60 weight percent oxypropylene groups (designated herein as Polyether L), 43.9 grams of R', an allyl started, acetoxy endcapped polyoxyalkylene polymer with an average molecular weight of about 4300 and containing about 40 weight percent oxyethylene groups and about 60 weight percent oxypropylene groups (designated herein as Polyether M), 9.1 grams of R''', an allyl started, acetoxy endcapped polyoxypropylene ether with an average molecular weight of about 424 (designated herein as Polyether I) and 42.8 grams of isopropanol. Then, 22.5 grams of a polyhydridosiloxane polymer having the average formula

$MD_{76}D'_{9}M$

(Calculated: 31.82 $mLH_2$/gram; Analyzed: 31.4 $mLH_2$/gram) was added to the pot. This mixture was heated to 75°C and 0.36 mL of an $H_2PtCl_6$/ethanol solution (10 mg Pt/mL) was added, corresponding to 25 ppm Pt. After an induction period of 7 seconds, an exotherm of 9°C was generated and a clear time of 71 seconds was noted. After holding the pot contents at 75°C for one hour, 1 wt. % $NaHCO_3$ was added followed by a nitrogen sparge assisted solvent strip. After completion of the strip, the pot contents were pressure filtered and the product collected. This product, designated herein as Surfactant 36, was a clear, amber colored liquid.

EXAMPLES 37-38

The next two terpolymers were prepared following the procedures outlined in Example 36.

TABLE VIII

| Surf. | Polyhydridosiloxane | R'' Polyether L | R' Polyether H | R''' Polyether D |
|---|---|---|---|---|
| 37 | $MD_{76}D'_{9}M$ - 19.9 g | 19.1 g | 53.6 g | 7.4 g |
| 38 | " - 21.1 g | 21.8 g | 48.9 g | 8.2 g |

Terpolymers 36 through 38 represent compositions where the blend average molecular weight of Polyethers L and M ranges from 2600 -2900 and the molar ratio of Polyethers L and M to Polyether I ranges from 1.3 to 1.5. Polyethers L and M are described in Example 35.

EXAMPLE 39

The next terpolymer was made according to the following procedure.

In a 250 mL three necked flask fitted with a heating mantle, mechanical stirrer, thermometer, Dean-Stark trap, Friedrich condenser and nitrogen sparge tube were combined 24.5 grams of R'', an allyl started, acetoxy endcapped polyoxyalkylene polymer with an average molecular weight of about 1560 and containing about 40 weight percent oxyethylene groups and about 60 weight percent oxypropylene groups (designated herein as Polyether N), 50.0 grams of R', an allyl started, acetoxy endcapped polyoxyalkylene polymer with an average molecular weight of about 4300 and containing about 40 weight percent oxyethylene groups and about 60 weight percent oxypropylene groups (designated herein as Polyether M), 4.3 grams of R''', an allyl started, acetoxy endcapped polyoxypropylene ether with an average molecular weight of about 233 (designated herein as Polyether O) and 24.9 grams of isopropanol. These polyether charges represent a blend average molecular weight of 2650 of Polyethers N and M and a molar ratio of Polyethers N and M to Polyether O of 1.75. Then, 21.3 grams of a polyhydridosiloxane polymer having the average formula

$MD_{76}D'_{9}M$

(Calculated: 31.82 $mLH_2$/gram; Analyzed: 31.4 $mLH_2$/gram) was added to the pot. This mixture was heated to 65°C and 0.36 mL of an $H_2PtCl_6$/ethanol solution (10 mg Pt/mL) was added, corresponding to 25 ppm Pt. After an induction period of 59 seconds, an exotherm of 10°C was generated and a clear time of 559 seconds was noted. After holding the pot contents at 65°C for one hour, 1 wt. % $NaHCO_3$ was added followed by a nitrogen sparge assisted solvent strip. After completion of the strip, the pot contents were pressure filtered and the product collected. This product, designated herein as Surfactant 39, was a clear, amber colored liquid.

EXAMPLES 40-42

The following three terpolymers were prepared according to the procedure of Example 36.

TABLE IX

| Surf. | Polyhydridosiloxane | R'' Polyether N | R' Polyether M | R''' Polyether O |
|---|---|---|---|---|
| 40 | $MD_{76}D'_{9}M$ - 23.2 g | 33.4 g | 39.3 g | 4.1 g |
| 41 | " - 22.4 g | 29.2 g | 44.4 g | 4.1 g |
| 42 | " - 21.6 g | 25.4 g | 48.9 g | 4.1 g |

Polyethers M, N and O are described in Example 38.

Terpolymers 40-42 represent compositions where the blend average molecular weight of Polyethers N and M ranges from 2350 - 2650 and the molar ratio of Polyethers N and M to Polyether O ranges from 1.65 - 1.85.

EXAMPLE 43

The following terpolymer was prepared according to the procedures outlined below.

In a 250 mL three necked flask fitted with a heating mantle, mechanical stirrer, thermometer, Dean-Stark trap, Friedrich condenser and nitrogen sparge tube were combined 24.5 grams of R'', an allyl started, acetoxy endcapped polyoxyalkylene polymer with an average molecular weight of about 1560 and containing about 40 weight percent oxyethylene groups and about 60 weight percent oxypropylene groups (designated herein as Polyether N), 50.0 grams of R', an allyl started, acetoxy endcapped polyoxyalkylene polymer with an average molecular weight of about 4300 and containing about 40 weight percent oxyethylene groups and about 60 weight percent oxypropylene groups (designated herein as Polyether M), 4.3 grams of R''', an allyl started, acetoxy endcapped polyoxypropylene ether with an average molecular weight of about 233 (designated herein as Polyether O) and 17.6 grams of dipropylene glycol. These polyether charges represent a blend average molecular weight of 2650 of Polyethers N and M and a molar ratio of Polyethers N and M to Polyether O of 1.75. Then, 21.3 grams of a polyhydridosiloxane polymer having the average formula

$MD_{76}D'_{9}M$

(Calculated: 31.82 $mLH_2$/gram; Analyzed: 31.4 $mLH_2$/gram) was added to the pot. This mixture was heated to 65°C and 0.36 mL of an $H_2PtCl_6$/ethanol solution (10 mg Pt/mL) was added, corresponding to 25 ppm Pt. After an induction period of 42 seconds, an exotherm of 8°C was generated and a clear time of 370 seconds was noted. After holding the pot contents at 65°C for one hour, 1 wt. % $NaHCO_3$ was added followed by a filtration at 275 kPa (40 psi) to remove solids. This product, designated herein as Surfactant 43, was a clear, amber colored liquid.

EXAMPLES 44-47

The following terpolymers were prepared according to the procedure outlined in Example 43.

TABLE X

| Surf. | Polyhydridosiloxane | R'' Polyether N | R' Polyether M | R''' Polyether O |
|---|---|---|---|---|
| 44 | $MD_{76}D'_{9}M$ - 22.4 g | 28.0 g | 45.2 g | 4.5 g |
| 45 | " - 21.8 g | 24.2 g | 49.4 g | 4.6 g |
| 46 | " - 20.9 g | 24.7 g | 50.5 g | 4.0 g |
| 47 | " - 20.4 g | 21.3 g | 54.3 g | 4.1 g |

The terpolymers 43-47 represent compositions where the blend average molecular weight of Polyethers N and M ranges from 2500 - 2800 and the molar ratio of Polyethers N and M to Polyether O ranges from 1.6 - 1.9.

EXAMPLE 48

In a 250 mL three necked flask fitted with a heating mantle, mechanical stirrer, thermometer, Dean-Stark trap, Friedrich condenser and nitrogen sparge tube were combined 33.3 grams of R'', an allyl started, acetoxy endcapped polyoxyalkylene polymer with an average molecular weight of about 1578 and containing about 40 weight percent oxyethylene groups and about 60 weight percent oxypropylene groups (designated herein as Polyether L), 39.2 grams of R', an allyl started, acetoxy endcapped polyoxyalkylene polymer with an average molecular weight of about 4300 and containing about 40 weight percent oxyethylene groups and about 60 weight percent oxypropylene groups (designated herein as Polyether M), 4.5 grams of R''', an allyl started, acetoxy endcapped polyoxypropylene ether with an average molecular weight of about 233 (designated herein as Polyether C) and 42.8 grams of dipropylene glycol. These polyether charges represent a blend average molecular weight of 2350 of Polyethers N and M and a molar ratio of Polyethers N and M to Polyether O of 1.85. Then, 23.1 grams of a polyhydridosiloxane polymer having the average formula

$MD_{76}D'_{9}M$

(Calculated: 31.82 $mLH_2$/gram; Analyzed: 31.4 $mLH_2$/gram) was added to the pot. This mixture was heated to 65°C and 0.36 mL of an $H_2PtCl_6$/ethanol solution (10 mg Pt/mL) was added, corresponding to 25 ppm Pt. After an induction period of 31 seconds, an exotherm of 7°C was generated and a clear time of 271 seconds was noted. After holding the pot contents at 65°C for one hour, 1 wt. % $NaHCO_3$ was added followed by a filtration at 275 kPa (40 psi) to remove solids. This product, designated herein as Surfactant 48, was a clear, amber colored liquid.

EXAMPLES 49-54

The following terpolymers were prepared according to the procedure outlined in Example 48.

TABLE XI

| Surf. | Polyhydridosiloxane | R'' Polyether N | R' Polyether M | R''' Polyether O |
|---|---|---|---|---|
| 49 | $MD_{76}D'_9M$ - 23.7 g | 32.8 g | 38.6 g | 4.9 g |
| 50 | " - 22.3 g | 29.1 g | 44.3 g | 4.5 g |
| 51 | " - 22.9 g | 28.6 g | 43.5 g | 5.0 g |
| 52 | " - 21.0 g | 25.6 g | 49.4 g | 4.0 g |
| 53 | " - 23.1 g | 33.3 g | 39.2 g | 4.5 g |
| 54 | " - 21.6 g | 25.3 g | 48.8 g | 4.5 g |

Terpolymers 49-54 represent compositions where the blend average molecular weight of Polyethers N nd M ranges from 2350 - 2650 and the molar ratio of Polyethers N and M to Polyether O ranges from 1.55 - 1.85.

EXAMPLES 55-64

The following terpolymers were prepared according to the procedure outlined in Example 43.

TABLE XII

| Surf. | Polyhydridosiloxane | R'' Polyether N | R' Polyether M | R''' Polyether D |
|---|---|---|---|---|
| 55 | $MD_{76}D'_9M$ - 21.2 g | 21.0 g | 49.7 g | 8.2 g |
| 56 | " 19.4 g | 18.7 g | 55.3 g | 6.7 g |
| 57 | " - 19.1 g | 16.8 g | 57.3 g | 6.9 g |
| 58 | " - 18.9 g | 16.9 g | 57.8 g | 6.5 g |
| 59 | " - 18.6 g | 17.0 g | 58.2 g | 6.2 g |
| 60 | " - 18.4 g | 15.2 g | 60.1 g | 6.4 g |
| 61 | " - 20.5 g | 21.4 g | 50.7 g | 7.4 g |
| 62 | " - 19.1 g | 18.9 g | 55.7 g | 6.4 g |
| 63 | " - 18.1 g | 15.3 g | 60.6 g | 6.0 g |
| 64 | " - 5.5 g | 0.0 g | 326 g | 1.9 g |

Terpolymers 55-64 represent compositions where the blend average molecular weight of the Polyethers N and M ranges from 2750 - 4300 and the molar ratio of Polyethers N and M to Polyether O ranges from 1.4 - 1.8.

EXAMPLES 65-69

The following terpolymers were prepared according to the procedure outlined in Example 43.

TABLE XIII

| Surf. | Polyhydridosiloxane | R'' Polyether N | R' Polyether M | R''' Polyether O |
|---|---|---|---|---|
| 65 | $MD_{76}D'_9M$ - 22.4 g | 28.0 g | 45.2 g | 4.5 g |
| 66 | " - 21.8 g | 24.2 g | 49.4 g | 4.6 g |
| 67 | " - 21.3 g | 24.5 g | 50.0 g | 4.3 g |
| 68 | " - 20.9 g | 24.7 g | 50.5 g | 4.0 g |
| 69 | " - 20.4 g | 21.3 g | 54.3 g | 4.1 g |

Terpolymers 65-69 represent compositions where the blend average molecular weight of Polyethers N and M ranges from 2500 - 2800 and the molar ratio of Polyethers N and M to Polyether O ranges from 1.6 to 1.9.

EXAMPLES 70-79

The following terpolymers were prepared according to the procedure outlined in Example 43.

TABLE XIV

| Surf. | Polyhydridosiloxane | R'' Polyether P | R' Polyether Q | R''' Polyether F |
|---|---|---|---|---|
| 70 | $MD_{76}D'_9M$ - 19.8 g | 20.2 g | 49.1 g | 11.0 g |
| 71 | " - 19.7 g | 17.0 g | 51.4 g | 11.9 g |
| 72 | " - 21.9 g | 15.4 g | 46.5 g | 16.2 g |
| 73 | " - 19.6 g | 13.3 g | 54.1 g | 13.0 g |
| 74 | " - 19.3 g | 12.6 g | 55.2 g | 12.8 g |
| 75 | " - 17.3 g | 9.7 g | 62.6 g | 10.4 g |
| 76 | " - 19.4 g | 8.9 g | 57.4 g | 14.3 g |
| 77 | " - 18.4 g | 13.0 g | 57.6 g | 11.1 g |
| 78 | " - 18.2 g | 9.5 g | 60.1 g | 12.1 g |
| 79 | " - 18.1 g | 5.4 g | 63.2 g | 13.4 g |

The terpolymers described above in Table XIV represent compositions that cover a range of 2750 - 3763 for the blend average molecular weight of Polyethers P and Q and a molar ratio range of Polyethers P and Q to Polyether F of from 0.8 - 1.4.

Polyether P is the same polyether as Polyether N above. Polyether Q is an allyl started, acetoxy endcapped polyoxyalkylene polymer with an average molecular weight of about 4400 and containing about 40 weight percent oxyethylene groups and about 60 weight percent oxypropylene units (R').

EXAMPLES 80-84

The following terpolymers were prepared according to the procedure outlined in Example 43.

TABLE XV

| Surf. | Polyhydildosiloxane | Polyether P | Polyether Q | Polyether C |
|---|---|---|---|---|
| 80 | $MD_{229}D'_{27}M$ - 21.2 g | 27.5 g | 47.1 g | 4.3 g |
| 81 | " - 16.9 g | 13.6 g | 66.1 g | 3.4 g |
| 82 | $MD_{152}D'_{18}M$ - 18.8 g | 19.7 g | 57.6 g | 3.8 g |
| 83 | $MD_{37}D'_{4.5}M$ - 20.4 g | 24.3 g | 51.1 g | 4.1 g |
| 84 | $MD_{17.5}D'_{2.25}M$ - 20.4 g | 24.3 g | 51.1 g | 4.1 g |

Terpolymers 80-84 represent compositions where the calculated average molecular weight ranges from 5580 - 71730. The blend average molecular weight of Polyethers P and Q ranges from 2350 - 2950 with a molar ratio of Polyethers P and Q to Polyether C of 1.75 for terpolymers 80-82. The blend average molecular weight of Polyethers P and Q is 2650 and the molar ratio of Polyethers P and Q to Polyether C is 1.75 for terpolymers 83 and 84.

EXAMPLES 85-87

The following terpolymers were prepared according to the procedure outlined in Example 43.

TABLE XVI

| Surf. | Polyhydridosiloxane | R'' Polyether P | R' Polyether Q | R''' Polyether R |
|---|---|---|---|---|
| 85 | $MD_{76}D'_{9}M$ - 18.7 g | 13.0 g | 50.4 g | 17.9 g |
| 86 | $MD_{76}D'_{9}M$ - 19.7 g | 12.2 g | 47.2 g | 21.0 g |
| 87 | $MD_{76}D'_{9}M$ - 17.6 g | 8.1 g | 54.3 g | 19.4 g |

Terpolymers 85-87 represent compositions having a blend average molecular weight of Polyethers P and Q of from 3076 - 3445 and a molar ratio of Polyethers P and Q to Polyether R of 0.8 - 1.0. Polyether R is an allyl started, acetoxy endcapped polyoxypropylene polymer with an average molecular weight of approximately 924 (R''').

EXAMPLES 88-93

The following terpolymers were prepared according to the procedure outlined in Example 43.

TABLE XVII

| Surf. | Polyhydridosiloxane | R'' Polyether P | R' Polyether Q | R''' Polyether D |
|---|---|---|---|---|
| 88 | $MD_{76}D'_{9}M$ - 20.5 g | 20.8 g | 50.9 g | 8.0 g |
| 89 | " - 19.3 g | 18.3 g | 55.2 g | 7.2 g |
| 90 | " - 19.3 g | 17.2 g | 56.0 g | 7.5 g |
| 91 | " - 20.0 g | 17.9 g | 54.0 g | 8.1 g |
| 92 | " - 18.3 g | 14.0 g | 60.6 g | 7.1 g |
| 93 | " - 19.2 g | 15.5 g | 57.6 g | 7.8 g |

EXAMPLE 94

The surfactants described above in Examples 1-93 (excluding 19-23) were evaluated in the polyurethane foam formulation shown below.

FORMULATION

| Material | pphp* (wt.) |
|---|---|
| Polyol I | 100.0 |
| Distilled Water | 5.5 |
| Bis-(2-dimethylamino)ether | 0.02 |
| Triethylene Diamine | 0.02 |
| Dimethylaminoethoxyethanol (DMEE) | 0.06 |
| Dipropylene Glycol | 0.10 |
| Methylene Chloride | 10.0 |
| Stannous Octoate | 0.23 |
| TDI 80/20 (112 Index) | 69.44 |
| Polysiloxane-polyoxyalkylene Terpolymer | VARIED |
| Test I | 1.50 |
| Test II | 1.25 |
| Test III | 1.00 |
| Test IV | 0.85 |
| Test V | 0.75 |
| Test VI | 0.50 |
| Test VII | 0.45 |

* parts per hundred parts polyol.

Polyol I is a polyol produced from glycerol and a mixture of 84 weight percent propylene oxide and 16 weight percent ethylene oxide. Polyol I has a hydroxyl number of 56.

TDI 80/20 (112 Index) is a mixture of 80 weight percent 2,4 tolylene diisocyanate and 20 weight percent 2,6-tolylene diisocyanate.

The results of the said foam evaluations of the above surfactants are reported in Table XVIII below. These results demonstrate the superior performance of the novel polysiloxane-polyoxyalkylene compositions of this invention over a range of concentrations.

TABLE XVIII

| Product of Example | Foam Test | Height in Rise,cm(in) | Airflow Rate |
|---|---|---|---|
| 1 | II | 94.0 (37.0) | 4.5 |
| 1 | III | 92.2 (36.3) | 5.2 |
| 1 | V | 92.2 (36.3) | 5.5 |
| 1 | VI | 85.3 (33.6) | 6.0 |
| 2 | II | 94.5 (37.2) | 5.3 |
| 2 | III | 91.2 (35.9) | 5.5 |
| 2 | V | 88.6 (34.9) | 5.7 |
| 2 | VI | 83.1 (32.7) | 5.5 |
| 3 | II | 91.4 (36.0) | 6.2 |
| 3 | III | 88.9 (35.0) | 6.5 |
| 3 | V | 84.6 (33.3) | 6.9 |
| 3 | VI | 84.6 (33.3) | 7.0 |
| 4 | II | 93.2 (36.7) | 5.5 |
| 4 | III | 92.7 (36.5) | 6.0 |
| 4 | V | 89.9 (35.4) | 7.0 |
| 4 | VI | 87.6 (34.5) | 7.3 |
| 5 | II | 93.2 (36.7) | 5.8 |
| 5 | III | 90.4 (35.6) | 5.6 |
| 5 | V | 90.7 (35.7) | 6.0 |
| 5 | VI | 79.2 (31.2) | 5.9 |
| 6 | II | 90.9 (35.8) | 7.5 |
| 6 | III | 90.7 (35.7) | 7.8 |
| 6 | V | 86.1 (33.9) | 7.4 |
| 6 | VI | 77.7 (30.6) | 7.0 |
| 7 | II | 86.4 (34.0) | 5.7 |
| 7 | III | 84.1 (33.1) | 5.5 |
| 7 | V | 83.6 (32.9) | 5.4 |
| 7 | VI | 67.3 (26.5) | voids |
| 8 | II | 91.7 (36.1) | 5.8 |
| 8 | III | 91.2 (35.9) | 5.9 |
| 8 | V | 87.9 (34.6) | 5.6 |
| 8 | VI | 86.1 (33.9) | 5.5 |

TABLE XVIII (continued)

| Product of Example | Foam Test | Height in Rise,cm(in) | Airflow Rate |
|---|---|---|---|
| 9 | II | 91.4(36.0) | 5.5 |
| 9 | III | 89.2(35.1) | 5.5 |
| 9 | V | 86.9(34.2) | 4.5 |
| 9 | VI | 77.5(30.5) | 4.6 |
| 10 | II | 86.9(34.2) | 5.5 |
| 10 | III | 86.6(34.1) | 6.0 |
| 10 | V | 81.0(31.9) | 5.4 |
| 10 | VI | 75.7(29.8) | voids |
| 11 | II | 82.6(32.5) | 5.1 |
| 11 | III | 80.3(31.6) | 5.2 |
| 11 | V | 70.4(27.7) | voids |
| 1 | VI | COLLAPSE | |
| 12 | II | 89.9(35.4) | 4.5 |
| 12 | III | 89.7(35.3) | 4.5 |
| 12 | V | 83.6(32.9) | 4.0 |
| 12 | VI | 77.7(30.6) | voids |
| 13 | II | 89.7(35.3) | 5.0 |
| 13 | III | 88.4(34.8) | 4.8 |
| 13 | V | 84.6(33.3) | 4.8 |
| 13 | VI | 75.4(29.7) | voids |
| 14 | II | 80.0(31.5) | 5.2 |
| 14 | III | 75.7(29.8) | 5.0 |
| 14 | V | 70.4(27.7) | voids |
| 14 | VI | COLLAPSE | |
| 15 | II | 81.3(32.0) | 5.5 |
| 15 | III | 76.2(30.0) | 6.8 |
| 15 | V | 74.9(29.5) | 7.4 |
| 15 | VI | 64.0(25.2) | voids |
| 16 | II | 84.6(33.3) | 6.8 |
| 16 | III | 85.1(33.5) | 7.5 |
| 16 | V | 79.0(31.1) | 4.0 |
| 16 | VI | 72.1(28.4) | voids |

TABLE XVIII (continued)

| Product of Example | Foam Test | Height in Rise, cm (in) | Airflow Rate |
|---|---|---|---|
| 17 | II | 86.4 (34.0) | 5.6 |
| 17 | III | 85.1 (33.5) | 5.8 |
| 17 | V | 82.6 (32.5) | 5.9 |
| 17 | VI | 78.5 (30.9) | 5.4 |
| 18 | II | 89.7 (35.3) | 6.0 |
| 18 | III | 89.4 (35.2) | 5.7 |
| 18 | V | 84.8 (33.4) | 6.0 |
| 18 | VI | 77.7 (30.6) | 3.6 |
| 24 | II | 93.0 (36.6) | 6.4 |
| 24 | III | 92.2 (36.3) | 6.8 |
| 24 | V | 88.9 (35.0) | 6.9 |
| 24 | VI | 82.0 (32.3) | 6.5 |
| 25 | II | 87.1 (34.3) | 5.5 |
| 25 | III | 82.0 (32.3) | 5.4 |
| 25 | V | 76.5 (30.1) | 7.3 |
| 25 | VI | 58.2 (22.9) | voids |
| 26 | II | 87.6 (34.5) | 7.0 |
| 26 | III | 86.9 (34.2) | 7.2 |
| 26 | V | 80.5 (31.7) | 7.3 |
| 26 | VI | 75.2 (29.6) | 7.3 |
| 27 | II | 93.7 (36.9) | 5.0 |
| 27 | III | 90.7 (35.7) | 5.6 |
| 27 | V | 85.9 (33.8) | 5.5 |
| 27 | VI | 79.0 (31.1) | 5.0 |
| 28 | II | 92.7 (36.5) | 7.0 |
| 28 | III | 89.7 (35.3) | 7.2 |
| 28 | V | 88.4 (34.8) | 7.5 |
| 28 | VI | 86.1 (33.9) | 7.5 |
| 29 | II | 93.5 (36.8) | 5.0 |
| 29 | III | 94.0 (37.0) | 5.5 |
| 29 | V | 90.2 (35.5) | 6.1 |
| 29 | VI | 84.8 (33.4) | 6.5 |

TABLE XVIII (continued)

| Product of Example | Foam Test | Height in Rise,cm(in) | Airflow Rate |
|---|---|---|---|
| 30 | II | 83.1(32.7) | 6.0 |
| 30 | III | 79.2(31.2) | 7.0 |
| 30 | V | 74.7(29.4) | 7.0 |
| 30 | VI | 66.5(26.2) | voids |
| 31 | II | 92.7(36.5) | 6.9 |
| 31 | III | 91.9(36.2) | 7.0 |
| 31 | VI | 83.8(33.0) | 7.0 |
| 32 | II | 90.7(35.7) | 7.6 |
| 32 | III | 91.4(36.0) | 8.2 |
| 32 | VI | 86.4(34.0) | 8.4 |
| 33 | II | 93.2(36.7) | 7.2 |
| 33 | III | 93.2(36.7) | 7.4 |
| 33 | VI | 84.3(33.2) | 7.1 |
| 34 | II | 94.0(37.0) | 5.8 |
| 34 | III | 95.8(37.7) | 6.5 |
| 34 | VI | 86.1(33.9) | 6.5 |
| 35 | II | 93.7(36.9) | 7.0 |
| 35 | III | 93.7(36.9) | 7.4 |
| 35 | VI | 81.3(32.0) | 6.5 |
| 36 | II | 92.7(36.5) | 8.0 |
| 36 | III | 91.4(36.0) | 8.4 |
| 36 | VI | 89.9(35.4) | 8.5 |
| 37 | II | 95.0(37.4) | 5.6 |
| 37 | III | 94.7(37.3) | 6.5 |
| 37 | VI | 86.1(33.9) | 6.7 |
| 38 | II | 94.0(37.0) | 6.5 |
| 38 | III | 94.0(37.0) | 7.3 |
| 38 | VI | 87.6(34.5) | 8.0 |
| 39 | II | 95.3(37.5) | 5.5 |
| 39 | IV | 93.5(36.8) | 6.5 |
| 39 | VII | 86.1(33.9) | 7.0 |

TABLE XVIII (continued)

| Product of Example | Foam Test | Height in Rise,cm(in) | Airflow Rate |
|---|---|---|---|
| 40 | II | 94.2(37.1) | 5.4 |
| 40 | V | 92.5(36.4) | 7.5 |
| 40 | VI | 89.2(35.1) | 9.0 |
| 41 | II | 95.0(37.4) | 5.0 |
| 41 | V | 94.2(37.1) | 7.0 |
| 41 | VI | 90.2(35.5) | 8.9 |
| 42 | II | 97.0(38.2) | 5.1 |
| 42 | V | 92.5(36.4) | 7.0 |
| 42 | VI | 89.4(35.2) | 8.5 |
| 43 | II | 96.0(37.8) | 4.0 |
| 43 | IV | 94.5(37.2) | 5.0 |
| 43 | VII | 88.6(34.9) | 6.5 |
| 44 | II | 94.7(37.3) | 4.5 |
| 44 | IV | 94.7(37.3) | 6.2 |
| 44 | VII | 87.9(34.6) | 7.6 |
| 45 | II | 96.3(37.9) | 3.9 |
| 45 | IV | 95.8(37.7) | 5.5 |
| 45 | VII | 89.4(35.2) | 7.1 |
| 46 | II | 95.0(37.4) | 5.0 |
| 46 | IV | 95.0(37.4) | 5.5 |
| 46 | VII | 87.4(34.4) | 6.0 |
| 47 | II | 96.3(37.9) | 4.3 |
| 47 | IV | 95.3(37.5) | 5.0 |
| 47 | VII | 88.6(34.9) | 5.6 |
| 48 | II | 91.9(36.2) | 4.6 |
| 48 | IV | 91.2(35.9) | 5.5 |
| 48 | VII | 82.8(32.6) | 6.9 |
| 49 | II | 89.4(35.2) | 8.0 |
| 49 | IV | 88.9(35.0) | 8.1 |
| 49 | VII | 83.6(32.9) | 8.5 |
| 50 | II | 90.4(35.6) | 5.3 |
| 50 | IV | 91.4(36.0) | 6.0 |
| 50 | VII | 84.1(33.1) | 7.5 |

TABLE XVIII (continued)

| Product of Example | Foam Test | Height in Rise, cm(in) | Airflow Rate |
|---|---|---|---|
| 51 | II | 91.9 (36.2) | 5.0 |
| 51 | IV | 87.9 (34.6) | 5.5 |
| 51 | VII | 85.6 (33.8) | 6.2 |
| 52 | II | 95.0 (37.4) | 5.3 |
| 52 | IV | 94.2 (37.1) | 5.9 |
| 52 | VII | 87.4 (34.4) | 5.8 |
| 53 | II | 92.2 (36.3) | 6.9 |
| 53 | IV | 89.4 (35.2) | 6.0 |
| 53 | VII | 85.3 (33.6) | 5.8 |
| 54 | II | 94.7 (37.3) | 5.5 |
| 54 | IV | 93.5 (36.8) | 5.8 |
| 54 | VII | 88.9 (35.0) | 6.6 |
| 55 | II | 94.2 (37.1) | 7.0 |
| 55 | IV | 92.7 (36.5) | 7.5 |
| 55 | VII | 89.2 (35.1) | 8.8 |
| 56 | II | 97.0 (38.2) | 4.8 |
| 56 | IV | 95.0 (37.4) | 5.0 |
| 56 | VII | 88.6 (34.9) | 6.5 |
| 57 | II | 97.0 (38.2) | 4.5 |
| 57 | IV | 95.0 (37.4) | 6.0 |
| 57 | VII | 91.2 (35.9) | 6.6 |
| 58 | II | 98.0 (38.6) | 3.4 |
| 58 | IV | 96.8 (38.1) | 3.5 |
| 58 | VII | 93.5 (36.8) | 3.5 |
| 59 | II | 98.6 (38.8) | 4.0 |
| 59 | IV | 95.5 (37.6) | 4.0 |
| 59 | VII | 91.2 (35.9) | 5.0 |
| 60 | II | 98.3 (38.7) | 3.8 |
| 60 | IV | 95.5 (37.6) | 3.8 |
| 60 | VII | 88.9 (35.0) | 3.7 |
| 61 | II | 95.8 (37.7) | 5.0 |
| 61 | IV | 93.2 (36.7) | 5.9 |
| 61 | VII | 88.9 (35.0) | 7.6 |

TABLE XVIII (continued)

| Product of Example | Foam Test | Height in Rise, cm(in) | Airflow Rate |
|---|---|---|---|
| 62 | II | 98.6 (38.8) | 3.8 |
| 62 | IV | 95.8 (37.7) | 4.5 |
| 62 | VII | 90.7 (35.7) | 5.5 |
| 63 | II | 96.3 (37.9) | 3.0 |
| 63 | IV | 96.3 (37.9) | 3.8 |
| 63 | VII | 90.4 (35.6) | 4.0 |
| 64 | II | 94.5 (37.2) | 3.4 |
| 64 | IV | 93.5 (36.8) | 3.5 |
| 64 | VII | 86.1 (33.9) | 2.2 |
| 65 | II | 94.7 (37.3) | 4.5 |
| 65 | IV | 94.7 (37.3) | 6.2 |
| 65 | VII | 87.9 (34.6) | 7.6 |
| 66 | II | 96.3 (37.9) | 3.9 |
| 66 | IV | 95.8 (37.7) | 5.5 |
| 66 | VII | 89.4 (35.2) | 7.1 |
| 67 | II | 96.0 (37.8) | 4.0 |
| 67 | IV | 94.5 (37.2) | 5.0 |
| 67 | VII | 88.6 (34.9) | 6.5 |
| 68 | II | 95.0 (37.4) | 5.0 |
| 68 | IV | 95.0 (37.4) | 5.5 |
| 68 | VII | 87.4 (34.4) | 6.0 |
| 69 | II | 96.3 (37.9) | 4.3 |
| 69 | IV | 95.3 (37.5) | 5.0 |
| 69 | VII | 88.6 (34.9) | 5.6 |
| 70 | I | 92.7 (36.5) | 5.5 |
| 70 | III | 93.2 (36.7) | 6.8 |
| 70 | VI | 87.9 (34.6) | 9.0 |
| 71 | I | 93.2 (36.7) | 5.4 |
| 71 | III | 91.7 (36.1) | 6.5 |
| 71 | VI | 88.6 (34.9) | 8.5 |
| 72 | I | 53.1 (20.9) | 3.9 |
| 72 | III | 73.9 (29.1) | 7.0 |
| 72 | VI | 71.9 (28.3) | 8.1 |

TABLE XVIII (continued)

| Product of Example | Foam Test | Height in Rise, cm(in) | Airflow Rate |
|---|---|---|---|
| 73 | I | 91.9 (36.2) | 7.0 |
| 73 | III | 93.0 (36.6) | 8.3 |
| 73 | VI | 86.1 (33.9) | 8.5 |
| 74 | I | 93.2 (36.7) | 6.3 |
| 74 | III | 92.7 (36.5) | 7.8 |
| 74 | VI | 87.6 (34.5) | 8.5 |
| 75 | I | 98.3 (38.7) | 3.0 |
| 75 | III | 95.0 (37.4) | 4.0 |
| 75 | VI | 92.2 (36.3) | 6.6 |
| 76 | I | 92.7 (36.5) | 7.8 |
| 76 | III | 90.9 (35.8) | 9.0 |
| 76 | VI | 86.1 (33.9) | 9.0 |
| 77 | I | 94.5 (37.2) | 3.7 |
| 77 | III | 94.5 (37.2) | 5.5 |
| 77 | VI | 91.4 (36.0) | 7.6 |
| 78 | I | 95.3 (37.5) | 4.0 |
| 78 | III | 95.0 (37.4) | 5.8 |
| 78 | VI | 90.7 (35.7) | 7.5 |
| 79 | I | 95.0 (37.4) | 5.9 |
| 79 | III | 95.0 (37.4) | 7.0 |
| 79 | VI | 87.6 (34.5) | 8.0 |
| 80 | II | 91.9 (36.2) | 5.5 |
| 80 | IV | 92.5 (36.4) | 5.4 |
| 80 | VII | 90.4 (35.6) | 5.8 |
| 81 | II | 92.7 (36.5) | 1.5 |
| 81 | IV | 91.4 (36.0) | 2.0 |
| 81 | VII | 90.4 (35.6) | 1.8 |
| 82 | II | 96.8 (38.1) | 2.3 |
| 82 | IV | 96.5 (38.0) | 3.5 |
| 82 | VII | 89.7 (35.3) | 2.8 |
| 83 | I | 96.5 (38.0) | 5.2 |
| 83 | III | 92.7 (36.4) | 5.5 |
| 83 | VI | 89.2 (35.1) | 7.5 |

TABLE XVIII (continued)

| Product of Example | Foam Test | Height in Rise, cm(in) | Airflow Rate |
|---|---|---|---|
| 84 | I | 70.9 (27.9) | 7.8 |
| 84 | III | 73.7 (29.0) | 8.0 |
| 84 | VI | 69.6 (27.4) | voids |
| 85 | I | 95.0 (37.4) | 3.1 |
| 85 | III | 94.5 (37.2) | 5.2 |
| 85 | VI | 90.4 (35.6) | 8.5 |
| 86 | I | 90.7 (35.7) | 4.6 |
| 86 | III | 89.9 (35.4) | 7.5 |
| 86 | VI | 85.1 (33.5) | 9.1 |
| 87 | I | 93.7 (36.9) | 4.2 |
| 87 | III | 90.7 (35.7) | 7.5 |
| 87 | VI | 91.4 (36.0) | 8.1 |
| 88 | I | 91.9 (36.2) | 6.8 |
| 88 | III | 88.6 (34.9) | 7.5 |
| 88 | VI | 87.6 (34.5) | 8.5 |
| 89 | I | 95.0 (37.4) | 5.5 |
| 89 | III | 91.9 (36.2) | 5.7 |
| 89 | VI | 92.5 (36.4) | 7.5 |
| 90 | I | 93.0 (36.6) | 6.5 |
| 90 | III | 92.5 (36.4) | 7.5 |
| 90 | VI | 88.4 (34.8) | 8.4 |
| 91 | I | 93.0 (36.6) | 5.5 |
| 91 | III | 91.2 (35.9) | 6.4 |
| 91 | VI | 90.2 (35.5) | 7.9 |
| 92 | I | 94.7 (37.3) | 5.4 |
| 92 | III | 93.5 (36.8) | 4.0 |
| 92 | VI | 89.9 (35.4) | 6.6 |
| 93 | I | 93.5 (36.8) | 3.5 |
| 93 | III | 92.2 (36.3) | 4.1 |
| 93 | VI | 92.7 (36.5) | 4.8 |

EXAMPLE 95

The terpolymers described in Examples 19-23 were evaluated in the polyurethane foam formulation shown below.

**FORMULATION**

| Material | pphp (wt.) |
|---|---|
| Polyol | 100.0 |
| Distilled Water | 5.7 |
| Bis-(2-dimethylamino)ether | 0.01 |
| Triethylene Diamine | 0.01 |
| Dimethylaminoethoxyethanol (DMEE) | 0.03 |
| Dipropylene Glycol | 0.05 |
| Methylene Chloride | 9.0 |
| Stannous Octoate | 0.2 |
| TDI 80/20 (110 Index) | 70.6 |
| Polysiloxane-polyoxyalkylene Terpolymer | VARIED |
| Test I | 1.50 |
| Test II | 1.00 |
| Test III | 0.70 |
| Test IV | 0.60 |
| Test V | 0.42 |

The results of the said foam evaluations of the above surfactants are reported in Table XIX below. These results demonstrate the superiority of the novel polysiloxane-polyoxyalkylene compositions of this invention as compared to a polysiloxane-polyoxyalkylene copolymer surfactant (CNTRL A).

TABLE XIX

| Product of Example | Foam Test | Height in Rise,cm(in) | Airflow Rate |
|---|---|---|---|
| CNTRL A | I | 37.3(14.7) | 5.00 |
| CNTRL A | II | 35.6(14.0) | 6.00 |
| CNTRL A | V | 30.5(12.0) | 5.50 |
| 19 | V | 33.8(13.3) | 7.25 |
| 20 | V | 36.8(14.5) | 4.50 |
| 21 | V | 37.1(14.6) | 1.25 |
| 22 | II | 37.3(14.7) | 4.00 |
| 22 | III | 36.8(14.5) | 4.75 |
| 22 | VI | 34.8(13.7) | 5.50 |
| 23 | II | 37.6(14.8) | 4.00 |
| 23 | III | 37.3(14.7) | 4.75 |
| 23 | VI | 35.6(14.0) | 4.25 |
| [19+20] (50/50) | II | 37.6(14.8) | 5.50 |
| [19+20] (50/50) | III | 37.3(14.7) | 6.00 |
| [19+20] (50/50) | VI | 34.0(13.4) | 5.50 |

CNTRL A is commercially available as B-8021 from Th. Goldschmïdt A.G. It is a hydrolyzable type surfactant that is not applicable in Flame Retardant formulations.

The following table documents for R' and R'', the calculated molecular weight of R''' (R'''-MW) molar ratios of R' and R' to R'''; (b+c:d), calculated blend average molecular weight (BAMW) and the calculated total blend average molecular weight (TOTAL BAMW) for all of the terpolymers described above (Examples 1-93).

TABLE XX

| Surfactant | R'& R'' BAMW | R'''-MW | (b+c):d | TOTAL BAMW |
|---|---|---|---|---|
| 1 | 2700 | 233 | 1.75 | 1803 |
| 2 | 2600 | 233 | 1.60 | 1690 |
| 3 | 2500 | 233 | 1.45 | 1575 |
| 4 | 2500 | 233 | 1.75 | 1676 |
| 5 | 2700 | 233 | 1.45 | 1693 |
| 6 | 2700 | 424 | 1.50 | 1790 |
| 7 | 2700 | 424 | 1.60 | 1825 |
| 8 | 3000 | 424 | 1.50 | 1970 |
| 9 | 3000 | 424 | 1.60 | 2009 |
| 10 | 2450 | 590 | 1.80 | 1785 |
| 11 | 2450 | 590 | 1.60 | 1735 |
| 12 | 2750 | 590 | 1.80 | 1980 |
| 13 | 2750 | 590 | 1.60 | 1920 |
| 14 | 2300 | 590 | 1.60 | 1640 |
| 15 | 2150 | 590 | 1.60 | 1550 |
| 16 | 2450 | 590 | 1.40 | 1675 |
| 17 | 2750 | 590 | 1.40 | 1850 |
| 18 | 2600 | 590 | 1.60 | 1830 |
| 19 | 2500 | 233 | 1.75 | 1676 |
| 20 | 2500 | 233 | 1.75 | 1676 |
| 21 | 2500 | 233 | 1.75 | 1676 |
| 22 | 2500 | 233 | 1.75 | 1676 |
| 23 | 2700 | 233 | 1.75 | 1803 |
| 24 | 2450 | 424 | 1.80 | 1726 |
| 25 | 2450 | 424 | 1.60 | 1671 |
| 26 | 2450 | 424 | 1.40 | 1606 |
| 27 | 2750 | 424 | 1.80 | 1919 |
| 28 | 2750 | 424 | 1.40 | 1781 |
| 29 | 2750 | 424 | 1.60 | 1855 |
| 30 | 2150 | 424 | 1.60 | 1486 |
| 31 | 2600 | 424 | 1.50 | 1730 |
| 32 | 2600 | 424 | 1.30 | 1654 |
| 33 | 2900 | 424 | 1.30 | 1823 |
| 34 | 2900 | 424 | 1.50 | 1910 |
| 35 | 2750 | 424 | 1.40 | 1781 |

TABLE XX (continued)

| Surfactant | R'& R'' BAMW | R'''-MW | (b+c):d | TOTAL BAMW |
|---|---|---|---|---|
| 36 | 2750 | 424 | 1.30 | 1739 |
| 37 | 2900 | 424 | 1.50 | 1910 |
| 38 | 2600 | 424 | 1.40 | 1693 |
| 39 | 2650 | 233 | 1.75 | 1771 |
| 40 | 2350 | 233 | 1.85 | 1607 |
| 41 | 2500 | 233 | 1.75 | 1676 |
| 42 | 2650 | 233 | 1.65 | 1740 |
| 43 | 2650 | 233 | 1.75 | 1771 |
| 44 | 2500 | 233 | 1.75 | 1665 |
| 45 | 2650 | 233 | 1.60 | 1720 |
| 46 | 2650 | 233 | 1.90 | 1815 |
| 47 | 2800 | 233 | 1.75 | 1865 |
| 48 | 2350 | 233 | 1.85 | 1607 |
| 49 | 2350 | 233 | 1.65 | 1551 |
| 50 | 2500 | 233 | 1.75 | 1676 |
| 51 | 2500 | 233 | 1.55 | 1611 |
| 52 | 2650 | 233 | 1.85 | 1802 |
| 53 | 2350 | 233 | 1.85 | 1607 |
| 54 | 2650 | 233 | 1.65 | 1740 |
| 55 | 2750 | 424 | 1.40 | 1781 |
| 56 | 2900 | 424 | 1.70 | 1983 |
| 57 | 3000 | 424 | 1.60 | 2009 |
| 58 | 3000 | 424 | 1.70 | 2046 |
| 59 | 3000 | 424 | 1.80 | 2080 |
| 60 | 3100 | 424 | 1.70 | 2109 |
| 61 | 2750 | 424 | 1.60 | 1855 |
| 62 | 2900 | 424 | 1.80 | 2016 |
| 63 | 3100 | 424 | 1.80 | 2144 |
| 64 | 4300 | 424 | 1.75 | 2891 |
| 65 | 2500 | 233 | 1.75 | 1675 |
| 66 | 2650 | 233 | 1.60 | 1720 |
| 67 | 2650 | 233 | 1.75 | 1770 |
| 68 | 2650 | 233 | 1.90 | 1815 |
| 69 | 2800 | 233 | 1.75 | 1865 |

TABLE XX (continued)

| Surfactant | R'& R'' BAMW | R'''-MW | (b+c):d | TOTAL BAMW |
|---|---|---|---|---|
| 70 | 2750 | 590 | 1.40 | 1850 |
| 71 | 2900 | 590 | 1.20 | 1850 |
| 72 | 2900 | 590 | 0.80 | 1615 |
| 73 | 3050 | 590 | 1.00 | 1850 |
| 74 | 3163 | 590 | 1.00 | 1880 |
| 75 | 3425 | 590 | 1.20 | 2135 |
| 76 | 3425 | 590 | 0.80 | 1850 |
| 77 | 3175 | 590 | 1.20 | 2000 |
| 78 | 3410 | 590 | 1.00 | 2000 |
| 79 | 3763 | 590 | 0.80 | 2000 |
| 80 | 2350 | 233 | 1.75 | 1580 |
| 81 | 2950 | 233 | 1.75 | 1962 |
| 82 | 2650 | 233 | 1.75 | 1771 |
| 83 | 2650 | 233 | 1.75 | 1771 |
| 84 | 2650 | 233 | 1.75 | 1771 |
| 85 | 3076 | 924 | 1.00 | 2026 |
| 86 | 3076 | 924 | 0.80 | 1903 |
| 87 | 3445 | 924 | 0.80 | 2071 |
| 88 | 2750 | 424 | 1.40 | 1780 |
| 89 | 2900 | 424 | 1.50 | 1910 |
| 90 | 2950 | 424 | 1.40 | 1898 |
| 91 | 2900 | 424 | 1.30 | 1823 |
| 92 | 3150 | 424 | 1.40 | 2014 |
| 93 | 3050 | 424 | 1.30 | 1908 |

EXAMPLE 96

The terpolymers described in Examples 67, 79 and 90 were evaluated in the Flame Retardant polyurethane foam formulations shown below.

FORMULATION

| Material | 96 A pphp | 96 B pphp | 96 C pphp | 96 D pphp* |
|---|---|---|---|---|
| Polyol I | 100.0 | 100.0 | 100.0 | 100.0 |
| Distilled Water | 4.8 | 4.8 | 4.8 | 4.8 |
| Bis-(2-dimethylamino)ether | 0.01 | 0.01 | 0.01 | 0.01 |
| Triethylene Diamine | 0.01 | 0.01 | 0.01 | 0.01 |
| Dimethylaminoethoxyethanol (DMEE) | 0.03 | 0.03 | 0.03 | 0.03 |
| Dipropylene Glycol | 0.05 | 0.05 | 0.05 | 0.05 |
| Methylene Chloride | 5.0 | 5.0 | 5.0 | 5.0 |
| Thermolin®-101** | 8.0 | 8.0 | 10.0 | 10.0 |
| Stannous Octoate | 0.23 | 0.23 | 0.23 | 0.23 |
| TDI 80/20 (110 Index) | 60.9 | 60.9 | 60.9 | 60.9 |
| Surfactant | 0.8 | 1.2 | 0.8 | 1.2 |

* parts per hundred parts polyol
** Thermolin®-101 is a flame retardant additive available from Olin Chemical Company.

The results of the said foam evaluations of the above surfactants are reported below. These foams were evaluated in California Burn Test 117.

TABLE XXI

| Product of Example | Foam Test | Height of Rise,cm(in) | Airflow $m^3$/m(scfm) | Char Length cm(in) | After Flame (seconds) |
|---|---|---|---|---|---|
| 67 | 96 A | 35.3(13.9) | 0.11(4.0) | 10.5(4.14) | 1.0 |
| 67 | 96 B | 35.6(14.0) | 0.08(3.0) | 11.1(4.38) | 0.4 |
| 67 | 96 C | 35.1(13.8) | 0.12(4.5) | 11.2(4.42 ) | 0.4 |
| 67 | 96 D | 35.6(14.0) | 0.09(3.3) | 11.9(4.70) | 1.4 |
| 79 | 96 A | 35.6(14.0) | 0.19(7.0 ) | 11.4(4.50) | 0.8 |
| 79 | 96 B | 36.3(14.3) | 0.17(6.3) | 11.3(4.44) | 0.8 |
| 79 | 96 C | 37.8(13.3) | 0.16(6.0) | 12.5(4.92) | 0.6 |
| 79 | 96 D | 34.8(13.7) | 0.15(5.5) | 8.08(3.18) | 0.0 |
| 90 | 96 A | 35.1(13.8) | 0.20(7.5) | 14.1(5.54) | 0.6 |
| 90 | 96 B | 35.3(13.9) | 0.17(6.3) | 11.9(4.70) | 0.4 |
| 90 | 96 C | 33.8(13.3) | 0.19(7.0) | 8.69(3.42) | 0.0 |
| 90 | 96 D | 35.1(13.8) | 0.18(6.5) | 13.3(5.22) | 1.0 |

All of the above surfactants passed the burn test. These tests are for evaluation purposes and are conducted under controlled conditions. The results are not intended as a warranty of how foams will burn under actual fire conditions.

## Claims

**1.** A polysiloxane-polyoxyalkylene composition of the nominal formula:

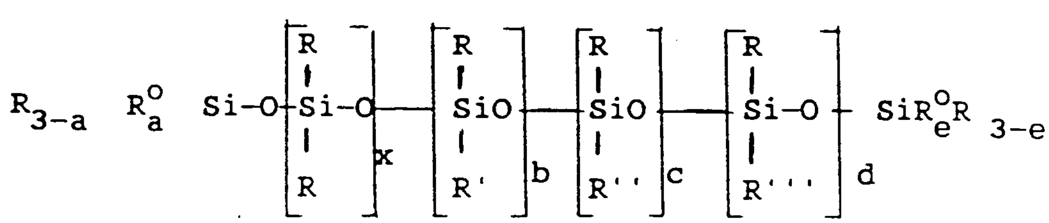

wherein R is an alkyl group having 1 to 3 carbon atoms and R°, R', R'' and R''' are individually

monovalent polyoxyalkylene polyethers attached to the silicon atom through a group of formula

$$-(CH_2)_z-O-$$

wherein z is 2 or 3; and

the polyoxyalkylene portion of R' is a poly(oxypropylene-oxyethylene) ether which contains 20% to 60% oxyethylene by weight and has an average molecular weight of from 3,000 to 5,500;

the polyoxyalkylene portion of R'' is a poly(oxypropylene-oxyethylene) ether which contains 20% to 60% oxyethylene by weight and has an average molecular weight of from 800 to 2,900; and

the polyoxyalkylene portion of R''' is a polyoxypropylene polyether having an average molecular weight from 130 to 1,200;

$R^o$ can be R', R'' or R''', a and e are individually 0 or 1; b, c, and d are numbers such that $b+c+d=y$, x and y are positive numbers such that the sum of $x+y$ ranges from 25 to 400 and x is greater than y; wherein the ratio $(b+c):d$ ranges from 0.8 to 1.9.

**2.** The composition of claim 1 wherein the polyoxyalkylene polyethers terminate with an alkoxy group having 1 to 4 carbon atoms or an acyloxy group of a lower aliphatic carboxylic acid.

**3.** The composition of claim 2 wherein the terminal group is acetoxy.

**4.** The composition of any one of claims 1 to 3 wherein R is methyl.

**5.** The composition of any one of claims 1 to 4 wherein the sum of $x+y$ is from 35 to 400, preferably from 40 to 260.

**6.** The composition of any one of claims 1 to 5 wherein the numerical ratio of x:y is from 3:1 to 15:1.

**7.** The composition of any one of claims 1 to 6 wherein the polyoxypropylene polyether of R''' comprises a polyoxypropylene polyether with a hydroxyl group attached to the terminal carbon of the polyoxypropylene polyether.

**8.** A process for preparing flexible polyurethane foam, said process comprising reacting and foaming a mixture comprising (a) a polyether containing at least two hydroxyl groups per molecule, (b) an organic polyisocyanate, (c) a catalyst for the reaction of (a) and (b) to produce a polyurethane, (d) a blowing agent and (e) a foam stabilizer comprising the composition of any one of claims 1 to 7.

**9.** The process of claim 8 wherein a minor amount of flame retardant additive is added to the mixture prior to the reacting step.

## Patentansprüche

**1.** Polysiloxane-Polyoxyalkylen-Zusammensetzung der nominellen Formel:

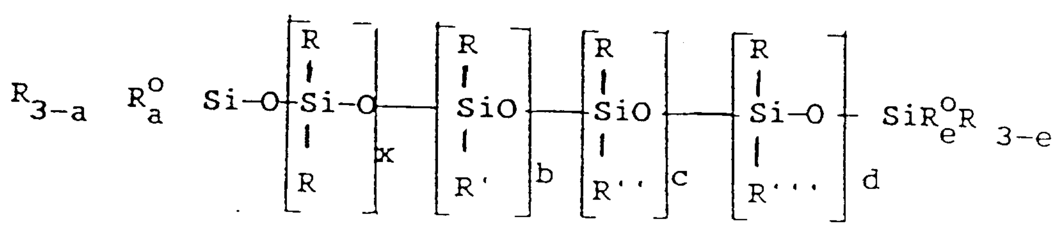

worin R eine Alkylgruppe mit 1 bis 3 Kohlenstoffatomen ist und $R^o$, R', R'' und R''' einzeln einwertige Polyoxyalkylen-Polyether, die durch eine Gruppe der Formel

$$-\left[CH_2\right]_z-O-,$$

worin z 2 oder 3 ist, an das Siliciumatom geknüpft sind, sind; und
der Polyoxyalkylen-Tei1 von R' ein Poly(oxypropylen-oxyethylen)ether, der 20 bis 60 Gew.-% Oxyethylen enthält und ein durchschnittliches Molekulargewicht von 3000 bis 5500 aufweist, ist;
der Polyoxyalkylen-Teil von R'' ein Poly(oxypropylen-oxyethylen)ether, der 20 bis 60 Gew.-% Oxyethylen enthält und ein durchschnittliches Molekulargewicht von 800 bis 2900 aufweist, ist; und
der Polyoxyalkylen-Teil von R''', ein Polyoxypropylen-Polyether mit einem durchschnittlichen Molekulargewicht von 130 bis 1200 ist;
$R^o$ R', R'' oder R''' sein kann, a und e einzeln für 0 oder 1 stehen; b, c und d solche Zahlen sind, daß $b+c+d=y$, x und y solche positive Zahlen sind, daß die Summe von $x+y$ im Bereich von 25 bis 400 liegt, und x größer als y ist;
worin das Verhältnis $(b+c):d$ im Bereich von 0,8 bis 1,9 liegt.

2. Zusammensetzung nach Anspruch 1, in welcher die Polyoxyalkylen-Polyether am Ende eine Alkoxygruppe mit 1 bis 4 Kohlenstoffatomen oder eine Acyloxygruppe einer niederaliphatischen Carbonsäure tragen.

3. Zusammensetzung nach Anspruch 2, in welcher die Endgruppe Acetoxy ist.

4. Zusammensetzung nach irgendeinem der Ansprüche 1 bis 3, in welcher R für Methyl steht.

5. Zusammensetzung nach irgendeinem der Ansprüche 1 bis 4, in welcher die Summe von $x+y$ 35 bis 400, vorzugsweise 40 bis 260 ist.

6. Zusammensetzung nach irgendeinem der Ansprüche 1 bis 5, in welcher das Zahlenverhältnis von x:y 3:1 bis 15:1 beträgt.

7. Zusammensetzung nach irgendeinem der Ansprüche 1 bis 6, in welcher der Polyoxypropylen-Polyether von R''' einen Polyoxypropylen-Polyether umfaßt, bei dem eine Hydroxylgruppe an das endständige Kohlenstoffatom des Polyoxypropylen-Polyethers geknüpft ist.

8. Verfahren zur Herstellung von flexiblem Polyurethanschaum, umfassend die Umsetzung und Schäumung einer Mischung, welche umfaßt (a) einen Polyether, der wenigstens 2 Hydroxylgruppen pro Molekül enthält, (b) ein organisches Polyisocyanat, (c) einen Katalysator für die Reaktion von (a) und (b) zur Herstellung eines Polyurethans, (d) ein Treibmittel und (e) einen Schaumstabilisator, der die Zusammensetzung nach irgendeinem der Ansprüche 1 bis 7 umfaßt.

9. Verfahren nach Anspruch 8, in welchem eine kleinere Menge eines flammverzögernden Additivs der Mischung vor der Umsetzungsstufe zugegeben wird.

**Revendications**

1. Composition de polysiloxane-polyoxyalkylène répondant à la formule nominale :

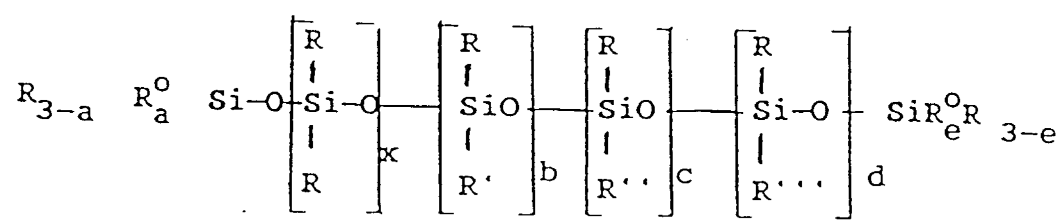

dans laquelle R représente un groupe alkyle ayant 1 à 3 atomes de carbone et $R^o$, R', R'' et R''' représentent, individuellement, des polyoxyalkylène-polyéthers monovalents fixés à l'atome de silicium par un groupe de formule

$$-\!\!\left[\; CH_2 \;\right]_{z}\; O-$$

dans laquelle z est égal à 2 ou 3 ; et

la portion polyoxyalkylène de R' est un polyéther d'oxypropylène-oxyéthylène qui contient 20 % à 60 % d'oxyéthylène, en poids, et possède un poids moléculaire moyen de 3000 à 5500 ;

la portion polyoxyalkylène de R'' est un polyéther d'oxypropylène-oxyéthylène qui contient 20 % à 60 % d'oxyéthylène, en poids, et possède un poids moléculaire moyen de 800 à 2900 ; et

la portion polyoxyalkylène de R''' est un polyoxypropylène-polyéther ayant un poids moléculaire moyen de 130 à 1200 ;

$R^o$ peut représenter R', R'' ou R''', a et e sont égaux individuellement à 0 ou 1 ; b, c et d sont des nombres tels que la somme b + c + d soit égale à y, x et y sont des nombres positifs tels que la somme x + y soit égale à une valeur de 25 à 400 et x est supérieur à y ; le rapport (b + c):d étant compris dans l'intervalle de 0,8 à 1,9.

2. Composition suivant la revendication 1, dans laquelle les polyoxyalkylène-polyéthers se terminent par un groupe alkoxy ayant 1 à 4 atomes de carbone ou un groupe acyloxy d'un acide carboxylique aliphatique inférieur.

3. Composition suivant la revendication 2, dans laquelle le groupe terminal est un groupe acétoxy.

4. Composition suivant l'une quelconque des revendications 1 à 3, dans laquelle R représente un groupe méthyle.

5. Composition suivant l'une quelconque des revendications 1 à 4, dans laquelle la somme x + y est égale à une valeur de 35 à 400, de préférence de 40 à 260.

6. Composition suivant l'une quelconque des revendications 1 à 5, dans laquelle le rapport numérique x:y est compris dans l'intervalle de 3:1 à 15:1.

7. Composition suivant l'une quelconque des revendications 1 à 6, dans laquelle le polyoxypropylène-polyéther de R''' comprend un polyoxypropylène-polyéther avec un groupe hydroxyle fixé à l'atome de carbone terminal du polyoxypropylène-polyéther.

8. Procédé de préparation d'une mousse de polyuréthanne flexible, ledit procédé comprenant la réaction et le moussage d'un mélange comprenant (a) un polyéther contenant au moins deux groupes hydroxyle par molécule, (b) un polyisocyanate organique, (c) un catalyseur pour la réaction de (a) et (b) afin de produire un polyuréthanne, (d) un agent porogène et (e) un stabilisant de mousse comprenant la composition suivant l'une quelconque des revendications 1 à 7.

9. Procédé suivant la revendication 8, dans lequel une petite quantité d'un additif retardateur de flamme est ajoutée au mélange avant l'étape de réaction.